(19) Europäisches Patentamt
European Patent Office
Office européen des brevets

(11) **EP 4 304 211 A1**

(12) **EUROPEAN PATENT APPLICATION**

(43) Date of publication:
**10.01.2024 Bulletin 2024/02**

(21) Application number: **22183737.0**

(22) Date of filing: **08.07.2022**

(51) International Patent Classification (IPC):
**H04W 4/029** (2018.01)    **H04W 4/50** (2018.01)

(52) Cooperative Patent Classification (CPC):
**H04W 4/029; H04W 4/50**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **Cronin, Harry Michael**
  **Eindhoven (NL)**
• **Beard, Timothy**
  **Eindhoven (NL)**
• **Dijk, Esko**
  **Eindhoven (NL)**
• **Garcia Morchon, Oscar**
  **Eindhoven (NL)**

(74) Representative: **Philips Intellectual Property & Standards**
**High Tech Campus 52**
**5656 AG Eindhoven (NL)**

(54) **CONTACT TRACING FOR LOW POWER ASSET TRACKERS**

(57)    The invention relates to an asset tracking system and method which allow low-capability, low-cost asset trackers to be tracked by a telecommunications or other wireless network while substantially reducing the power demand on the asset trackers, by providing mutual contact tracing by the trackers over a low-power local communication protocol. The contacts may be reported to a network which is able to optimize for power usage by the trackers versus location certainty of tracker location estimates stored in its ongoing model by reducing the number of, and/or transmit power of, uplink or D2D transmissions, and/or by fixed or dynamic cluster formation as required.

Fig. 5

EP 4 304 211 A1

**Description**

FIELD OF THE INVENTION

The invention relates to tracker control systems used for e.g. contact tracing, asset tracking etc. in wireless networks, such as - but not limited to - cellular networks, in particular, fifth generation (5G) or higher generation cellular networks.

BACKGROUND OF THE INVENTION

Driven by public health and other use cases, contact tracing (in which devices identify other devices which are observed within a certain range) has proliferated in recent years. Ruoxi Sun et al.: "An Empirical Assessment of Global COVID-19 Contact Tracing Applications", arXiv:2006.10933v6 [cs.CR] 22 Jan 2021, describes that a problem of contact tracing is that a central authority might carry out linkage attacks and thereby discover a user's location history from interactions with other users. Samuel Brack et al.: "CAUDHT: Decentralized Contact Tracing Using a DHT and Blind Signatures", IEEE 2020, discloses options to defend such attacks. While the possibility of linkage attacks in contact tracing is considered a problem in public health settings, it may be used to provide desired functionality in asset tracking use cases.

Asset tracking leverages sensors and/or connected devices to enable remote monitoring and management of an asset's geographical position (geoposition) and/or movements. Some manufacturers of Bluetooth-based asset trackers have added contact tracing as an additional function to their products (e.g., Bluetooth Low Energy (BLE) tags for indoor asset tracking, that can be worn by people or attached to critical equipment, along with real-time and historic contact tracing). Real-time contact tracing enables organisations to monitor the number of people present in a specific area and enforce social distancing measures by establishing active density control. However, contact tracing and tag tracking functions are not integrated in such products.

Additionally, asset tracking is a use case for future telecommunications networks. Initial use cases were defined for asset trackers in 3GPP specification R17 TR 22.836 but no consideration was given to tracking objects below the size of a pallet.

Cost reductions in chipsets, among other advances, are greatly reducing the cost of asset trackers for narrowband IoT (NB-IoT) and Long Term Evolution for machines (LTE-M) systems, meaning that far more assets may be tracked in future. An example is a printable NB-IoT-based tracking label to monitor its products through the supply chain. This smart label integrates cellular subscriber identity module (iSIM) functionality, as a layout on printable silicon, into the communications module, along with a printable battery, microprocessor, antenna, modem, plus a couple of sensors. It connects to the cellular network when it is torn or cut, after printing and attaching to the package.

As confirmed in a ranging study by Mario H. Castañeda Garcia et al.: "A Tutorial on 5G NR V2X Communications", IEEE Communications Surveys & Tutorials journal (DOI 10.1109/ COMST.2021.3057017) and by Zoraze Ali et al.: "3GPP NR V2X Mode 2: Overview, Models and System-Level Evaluation", IEEE Access, 29 June 2021 (DOI: 10.1109/ACCESS.2021.3090855), existing device-to-device (D2D) communications approaches may allow some form of contact tracing (either in coverage or out of coverage), but typically require too frequent communications and furthermore do not offer a network-side asset as an easy way to modify the function of the contact tracing carried out by devices on the D2D link. Thus, requirements for asset tracking systems include long battery life or in general low power consumption of asset trackers, requiring power saving modes of communication.

Asset tracking is also a use case for IoT applications and/or systems, and one in which involvement of a public network (such as the 5G network) is advantageous for ubiquity. However, long-range communications protocols used by such networks remain energy intensive compared with short range or local protocols, and so the number and range of such communications should be minimized to conserve energy of the trackers.

SUMMARY OF THE INVENTION

It is an object of the present invention to provide improved asset tracking with reduced energy consumption.

This object is achieved by an apparatus as claimed in claim 1 and 7, by a tracker as claimed in claim 11, by a tracker control system as claimed in claim 13, by a method as claimed in claim 14 and 15, and by a computer program product.

According to a first aspect, an apparatus is provided (e.g., at a tracker) for controlling a tracker to provide information about the tracker and/or a tracked item via a wireless network to a tracker control system, wherein the apparatus is adapted to:

 perform local contact tracing of other trackers; and

provide contact reports derived from the local contact tracing to the tracker control system.

According to a second aspect, an apparatus is provided (e.g., at an access device of the wireless network or at a core network function of a core network of the wireless network or at a tracker with a role of a cluster head of a cluster of trackers) for controlling a tracker control system operated via a wireless network, wherein the apparatus is adapted to:

obtain information about a plurality of trackers and/or tracked items of the tracker control system, the information being reported by at least one of the plurality of trackers via contact tracing; and
control at least one of the plurality of trackers to change at least one of a contact tracing range and sleep and/or wake cycles and/or to reduce a number of uplink transmissions and/or to form a cluster of trackers. This change can be made e.g. to thereby control a trade-off between location estimation accuracy and energy consumption of the plurality of trackers.

According to a third aspect, a tracker comprising the apparatus of the first aspect or, if the tracker is operated as a cluster head, the apparatus of the second aspect is provided.
According to a fourth aspect, a tracker control system comprising a plurality of trackers according to the third aspect and a wireless network comprising an apparatus according to the second aspect in a network device and/or a cluster head of a cluster of cluster trackers is provided.
According to a fifth aspect, a method of controlling a tracker to provide information about the tracker and/or a tracked item via a wireless network to a tracker control system is provided, wherein the method comprises:

performing local contact tracing of other trackers; and
providing contact reports derived from the local contact tracing to the tracker control system.

According to a sixth aspect, a method of controlling a tracker control system operated via a wireless network is provided, wherein the method comprises:

obtaining information about a plurality of trackers and/ortracked items of the tracker control system, the information being reported by at least one of the plurality of trackers via contact tracing; and
controlling at least one of the plurality of trackers to change at least one of a contact tracing range and sleep and/or wake cycles and/or to reduce a number of uplink transmissions and/or to form a cluster of trackers. This change can be made e.g. to thereby control a trade-off between location estimation accuracy and energy consumption of the plurality of trackers.

Finally, according to a seventh aspect, a computer program product is provided, which comprises code means for producing the steps of the above methods according to the fifth or sixth aspects when run on a computer device.
Accordingly, low-capability, low-cost (asset) trackers are allowed to be tracked by a telecommunications network or other wireless network while substantially reducing the power demand on the asset trackers, by mutual contact tracing by the trackers over a low-power local protocol. The contacts can be reported to a network so as to provide for optimization of power usage by the trackers versus location certainty of an ongoing model by reducing the number of, and/or transmit power of, uplink or D2D transmissions, and/or by fixed or dynamic cluster formation as required. A contact report may be a message sent by a tracker and containing information related to the tracker, tracker type, or tracker-sensed values, or tracker location. In a specific example, the contact report may include information about a contact with another tracker. This may include contacted tracker identities and/or contacted tracker types and/or contacted tracker sensed values and/or a contacted tracker location.
Thereby, power demand on trackers of asset tracking systems can be reduced under control of a network-side model while retaining a desired level of location accuracy, by reducing the required number of uplink and/or D2D transmissions and/or reducing the relative time spent by the trackers in a wake mode versus a sleep mode.
The location-related information may be location information (e.g., geographical coordinates or distances or the like) or other location-related information such as presence of other trackers, or the signal strength (or other properties) of the signals received from other trackers. Then, the location system uses this other location-related information to create estimates of tracker locations, obtain identifiers of items (to which to the trackers are attached), the type of item (to which the tracker is attached) and/or a sense value (e.g., temperature) of an item (to which the tracker is attached).
Furthermore, local contact tracing allows the asset trackers to form persistent clusters which can be kept together even out of network coverage. This allows the trackers to search locally for contacts while out of coverage (where the trackers may be geographically mobile) and use these to enable the network to maintain knowledge about their location. The network may also use such mobile trackers to search for out-of-coverage clusters.

EP 4 304 211 A1

According to a first option which may be combined with any of the above first to seventh aspects, the local contact tracing may be configured to save energy of trackers of the tracker control system by at least one of combining individual contact reports to reduce the number and range of uplink communications required for any of the trackers, allowing for network- or cluster-controlled sleep and/or wake cycles of the tracker, and delegating a task of maintaining network contact to a tracker (e.g., a tracker that is predicted to have a longer operational lifetime than other trackers in its vicinity). Thereby, contact tracing can be configured to optimize scheduling of communication and active periods of trackers to reduce energy consumption of the trackers.

According to a second option which may be combined with the first option or any of the above first to seventh aspects, functionality of trackers may be retained even when out of coverage of the wireless network by enabling the tracker to be locally provisioned and maintained, in such a way to be discoverable at suitable times and report information about contacts which occurred with the tracker while out-of-coverage. Thereby, standalone and isolated trackers can be detected and reintegrated into the network or clusters to optimize communication efficiency and energy consumption.

According to a third option which can be combined with the first or second option or any of the above first to seventh aspects, a contact tracing range and/or sleep and/or wake cycles of the tracker may be controlled based on at least one of a location and a detected movement of the tracker. Thus, individual trackers are enabled to reduce energy consumption by adapting their operating parameters to their location and state of movement.

According to a fourth option which can be combined with any of the first to third options or any of the above first to seventh aspects, the tracker can be controlled to enter a provisioning mode, in which it attempts to discover the wireless network and/or local trackers which are part of a cluster. Thereby, newly added trackers can be integrated into the tracking location system and incorporated into existing clusters.

According to a fifth option which can be combined with any of the first to fourth options or any of the above first to seventh aspects, a network-side model may be provided and configured to control the trade-off by changing at least one of the contact tracing range and the sleep and/or wake cycles of the plurality of trackers. Thus, the wireless network can be configured to control the trade-off between location estimation accuracy and energy consumption of the tracker control system.

According to a sixth option which can be combined with any of the first to fifth options or any of the above first to seventh aspects, the network-side model may be adapted to use received identification information reported by the plurality of trackers and known location-related information of some of the plurality of trackers and/or non-tracker devices to calculate a known or inferred location-related information of each of the plurality of trackers. Thereby, location estimates of all trackers of the tracker control system can be continuously provided through contact tracing, even if certain trackers are out of coverage.

According to a seventh option which can be combined with any of the first to sixth options or any of the above first to seventh aspects, provisioning of at least one clusters of trackers may be enabled in such a way that the cluster is discoverable by trackers or the tracker control system and configured to report information about traced contacts which occurred with trackers of the cluster while out of coverage of the wireless network. Thereby, location estimates of all trackers of the tracker control system can be continuously provided through contact tracing in clusters, even if certain trackers of the cluster are out of coverage.

According to an eighth option which can be combined with any of the first to seventh options or any of the above first to seventh aspects, a synchronization device may be provided for providing a time synchronization reference signal to cluster trackers within a cluster range. Thus, nearby clusters can be detected by trackers based on their synchronization reference signals

It is noted that the above apparatuses may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatus of claim 1 and 7, the tracker of claim 11, the tracker control system of claim 13, the methods of claim 14 and 15, and the corresponding computer program product may have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

BRIEF DESCRIPTION OF THE DRAWINGS

In the following drawings:

Fig. 1 schematically shows a block diagram of an tracker control system according to various embodiments;

Fig. 2 schematically shows a signaling and processing diagram for a provisioning process according to an embodiment;

Fig. 3 schematically shows a signaling and processing diagram for a main use phase according to an embodiment;

Fig. 4 schematically shows flow diagrams of a provisioning process and a main use phase process according to respective embodiments; and

Fig. 5 schematically shows an example of an asset tracking system with standalone mode and dynamic clusters according to an embodiment.

DETAILED DESCRIPTION OF EMBODIMENTS

Embodiments of the present invention are now described based on ranging and/or positioning (sometimes also called "localization") services for cellular networks, where e.g. 4G network elements may be incorporated in proposed 5G solutions and/or 5G and/or 5G New Radio (5G NR) radio access technologies may be used.

Asset tracking is meant to refer to a method of tracking physical assets, either by scanning barcode labels attached to the assets or by using tags using, e.g., global positioning systems (GPS), BLE, Long Range (LoRa), radio frequency identification (RFID), WiFi, or DECT 2020 to broadcast their location. These technologies can also be used for indoor tracking of persons wearing a tag.

An asset tracker (sometimes referred to as "tracker" in the present disclosure) is to be understood as a device (e.g., tag, sensor etc.) that enables remote monitoring and/or management of an item or asset's geographic position and/or movements.

Asset tracking can be used, e.g.:

- to keep track of the (identities) of items at a specific known location (e.g., in a container), or
- to identify which type of items are at a specific location, or
- to identify features (e.g., a specific sensor output such as the temperature of a temperature sensor) of an item (or environment) to which a tracker is attached (where the tracker is deployed), or
- to retrieve the location of the trackers, and thus, of items they are attached to.

A tracker can be attached to an item (or deployed in a given area) to keep track of it.

Throughout the present disclosure, the term "wireless network" is intended to mean a whole network system (e.g., 4G or 5G system) including communication devices (e.g., UEs) radio access network (RAN) and core network (CN). Furthermore, the abbreviations "eNB" (4G terminology) and "gNB" (5G terminology) are intended to mean access device such as a cellular base station or a WiFi access point. The eNB/gNB is part of the RAN, which provides an interface to functions in the CN. The RAN is part of a wireless communication network. It implements a radio access technology (RAT). Conceptually, it resides between a communication device such as a mobile phone, a computer, or any remotely controlled machine and provides connection with its CN. The CN is the communication network's core part, which offers numerous services to customers who are interconnected via the RAN. More specifically, it directs communication streams over the communication network and possibly other networks. In the 3GPP specifications 23.303, 23.304, 24.334 and 24.554 for 4G and 5G networks, respectively, so-called proximity service (ProSe) functions are defined to enable - amongst others - connectivity for cellular communication devices (e.g., UEs) that are temporarily not in coverage of an access device (eNB). This particular function is called ProSe UE-to-network relay, or Relay UE. The Relay UE is a communication device that helps another out-of-coverage (OoC) UE to communicate to the eNB (i.e., access device) by relaying application and network data traffic in two directions between the OoC UE and the eNB. The local communication between the Relay UE and the OoC-UE is called D2D communication or Sidelink communication or PC5 communication. The abbreviation "PC5" designates an interface for sidelink communication as defined by ProSe. Furthermore, the abbreviation "UL" is used for the uplink direction from the communication device (e.g., UE) to the access device (e.g. eNB, gNB), the abbreviation "DL" for the downlink direction from the access device (e.g. eNB, gNB) to the communication device (e.g. UE), and the abbreviation "SL" for sidelink communication between two or more communication devices (e.g. UEs).

Once a relaying relation is established, the OoC-UE is connected via the Relay UE and acts in a role of "Remote UE". This situation means the Remote UE has an indirect network connection to the CN as opposed to a direct network connection that is the normal case (cf. 3GPP specification TS 22.261 v16.10.0).

Furthermore, 3GPP specifications TR 23.733 v15.1.0 and TR 36.746 v15.1.1 provide studies on architectural enhancements e.g. to enable an IoT device (in a role of Remote UE) to operate on very low power by using a Relay UE to connect to the wider network. Because the Relay UE is physically very close, it can be reached using very low power transmissions. This work also includes security, speed and stability improvements to ProSe. These extensions of ProSe are called enhanced ProSe ("eProSe").

ProSe can also be used for direct communication between two UEs. Additional radio level details on ProSe, V2X and sidelink communication can be found in 3GPP specifications TR 37.985, TS 38.300 and TR 38.836.

Ranging can be defined as a process which measures a distance and/or relative directional angle between two wireless devices in a 3-dimensional space. In the initially mentioned specification TR 22.855 *"Study on Ranging-based Services"*, ranging-based services are defined as applications utilizing the distance between two UEs and/or the direction of one UE from the other. These ranging-based services are envisioned to be supported with or without network coverage. Next to the measurement of the distance and directional angle, a relevant measurement is whether two wireless devices are in direct Line-of-Sight or not since this is relevant for many use cases in which UEs are supposed to interact with each other if they are in Line-of-Sight, e.g., in the same room.

So-called ranging reference signals may be used for determining the distance and/or angle between two devices that may be connected through a D2D connection (e.g., using sidelink and/or PC5) rather than an infrastructure connection (e.g. using Uu interface). The ranging reference signals may be position reference signals and/or sounding reference signals or other signals (e.g., signals used for round-trip time (RTT) measurements) that may be used for determining distance and/or angle between the devices, possibly using resources (that may be configured or granted by an access device) for device-to-device (e.g. sidelink) communication and/or resources specifically reserved for sending the reference signals or the other signals that may be used for determining distance and/or angle between the devices.

Not every device is capable of calculating the angle, since it requires multiple antennas. The ranging capabilities of the device (which can be exchanged as part of the discovery process) can be used to determine what a device is capable of and which measurements can be made. Note that angle calculation may need to be an explicit capability rather than based solely on a capability declaring the number of antennas. The number of antennas alone being bigger than one does not automatically imply that the device is capable of calculating an angle. The calculation of the angle may further require a sensor (e.g. magnetometer, gyroscope, accelerometer) to derive an orientation and/or angle towards a reference point, such as the magnetic north, and an angle/orientation calibration mechanism. The angle may also indicate a difference in height, and may use a reference height (e.g. meters above sea level and/or barometric pressure, floor information, terrain height data for the device position), and a height calibration mechanism.

A ranging measurement between two UEs as described e.g. in the ranging study by Mario H. Castañeda Garcia et al.: "A Tutorial on 5G NR V2X Communications" (DOI 10.1109/COMST.2021.3057017) may result in two parameters, which are the distance between the two UEs in meters and an angle in degrees at which the target UE is elevated in a 3D plane from the observer UE.

Furthermore, a so-called "peer-to-peer ranging" can be done in many ways including but not limited to:

i. Two-way ranging, which is a process where two devices A and B communicate a data packet and an acknowledgement packet back and forth with themselves. The time delay occurring due to natural radio signal propagation and due to processing delay on the device B (i.e., time taken by the device B to resend a packet to device A) is taken into consideration in this technique. The one-way time of flight is then calculated on device A as the half of the difference between a) the time spent by the device A between transmitting a packet and receiving the next packet from B and b) the time spent by the device B between receiving a packet from A and transmitting the response packet back to A. Device B includes information in its response packet such that A can calculate the time spent of B. Then at device A, the one-way time of flight may be used to calculate the distance between two devices A and B. Device B may perform the same procedure with device A such that B can also calculate this distance. The two devices' clocks need not be synchronized with each other in this technique since the processing delay is accounted for with two consecutive packet transmissions and distance may be calculated simultaneously in both devices.

ii. One way ranging, which is a process, where at least one packet is transmitted between the transmitting wireless device A and a receiving wireless device B. These devices are synchronized with each other by a common clock source. The time of flight is then measured as the difference between the time of reception at the device B and the time of transmission at the device A. Device A may include a timestamp of its time of transmission within the data packet, so that device B can calculate this time difference. The accuracy of ranging depends on the accuracy of clock synchronization achievable between the two devices.

The peer-to-peer ranging operation may depend on multiple parameters of wireless communication such as clock time synchronization between the devices, communication path (e.g., line of sight (LOS) or non-line of sight (NLOS)) over which the signal is transmitted, antenna properties, frequency of operation, transmission power and receiver sensitivity of the wireless radios. These parameters are also important for radio communication in general, resulting in multitude of standardized techniques to achieve highest communication performance for a given radio. For example, in 3GPP the sidelink radio resource protocol as described in specification 36.331 v16.4.1 ensures clock time synchronization with high accuracy between two sidelink UEs operating in multiple in-coverage and out-of-coverage scenarios.

Positioning can be defined as a process of determining, according to a location coordinate system, location coordinates of wireless devices such as but not limited to mobile phone, wearables, and IoT devices. Upon determining of the location coordinates of a device, it can be located on a map using a mapping function. Positioning is typically distinguished between absolute positioning (i.e., determine geographical coordinates (location coordinates) according to a standardized geographic coordinate system), or relative positioning (i.e., determine coordinates (e.g., using a local coordinate system) and/or angle plus distance relative to a reference point). Some examples of how absolute positions or relative positions can be expressed can be found in 3GPP specification TS 23.032. A classic example is a satellite-based location service (e.g., Global Positioning System (GPS) or Global Navigation Satellite System (GNSS)), where a device's location coordinates are calculated using at least three of the many satellites belonging to a constellation of medium earth orbit (MEO) satellites using well known processes such as triangulation and trilateration, where the satellites act as the clock synchronization source and communication delay of the transmitted packets are used to estimate the location coordinates. These coordinates can be used by any third-party mapping tool (e.g., OpenStreetMap) to pinpoint the location of a device in a geographical map of the area. Also, several indoor positioning techniques based on radio frequency technologies such as Bluetooth, UltraWideBand (UWB), or Wi-Fi are available, which can locate/determine the coordinates of a radio frequency (RF) emitting tag in an indoor environment. The position of these tags may then be mapped onto an indoor floor plan using the indoor coordinates estimated based on the RF propagation properties such as time delay, multipath reflections, received signal strength, etc., measured using RF communication between the tags and anchor nodes that are placed in pre-known locations of the building. In examples, signal strength may be used directly to estimate a range or to estimate multiple ranges and positions at once using multiple collected measurements for better performance.

Positioning techniques used for obtaining a coordinate of a device's current location can be accomplished in several ways, but typically includes triangulation and/or trilateration based on a set of measured distances and/or angles between the device and a set of other devices or reference points. Distances and angles can be determined using various techniques which may include round trip time (RTT), time of flight (ToF), time difference of arrival (TDoA), angle of arrival/departure (AoA/AoD) and/or a combination thereof:

The round trip time (RTT) defines a duration from when a data packet transmitted by a transmitter (Tx, e.g., an access point/device) to when the same data packet is received and acknowledged by a receiver (Rx, e.g., a mobile phone/device) i.e. up to the moment the transmitter receives the acknowledgement. Since the data packet travels at the speed of light in air medium (approximately 3.3 ns/m), the time duration the data packet travels in air is proportional to the actual distance between the Tx and the Rx. In scenarios, where the internal clocks in the Tx and the Rx are not synchronized, a one-way time measurement cannot be based on differences between time stamps of transmission and reception, since it will also include the timing errors caused by, among others, internal clock drifts and indeterministic clock offsets between Tx and Rx. Since the internal clocks of Tx and Rx are not synchronized, the difference in time stamps when the signal travels in the reverse direction (i.e., Rx to Tx) is affected in the opposite way by the clock offset as in the forward direction (i.e., Tx to Rx).

According to the round-trip-time concept, a data packet is transmitted at time t1 from the Tx to the Rx and received at the Rx at time t2. An acknowledgement (ACK) is transmitted at time t3 from the Rx to the Tx and received at the Tx at time t4.

The round trip time (RTT) can be obtained without having to know any clock offsets by simple addition and subtraction of the four time stamps t1 to t4, as follows:

$$RTT = (t4\text{-}t1 + t2\text{-}t3)$$

where t1 is the time of transmission, t2 is the time of reception, t3 is the time of acknowledgement transmission and t4 is the time of acknowledgement reception.

The distance D between the Tx and the Rx can be estimated by using the following equation:

$$2 * D = ((t4\text{-}t1) - (t3\text{-}t2)) * c$$

where, c is the speed of light. Also note that in RTT measurements-based distance estimation there is no need of synchronization between the transmitter and receiver. The calculation of a single distance can be extended to two- and three-dimensional spaces for estimation of multiple distances, which can then be translated to estimates of location coordinates (both local and global) when the coordinates of each transmitter are known in advance. Some standardized mechanisms using an RTT based technique include Fine Timing Measurement (FTM) as defined in IEEE 802.11-2016, and Enhanced Cell-ID (E-CID) as defined in 3GPP TS 36.133.

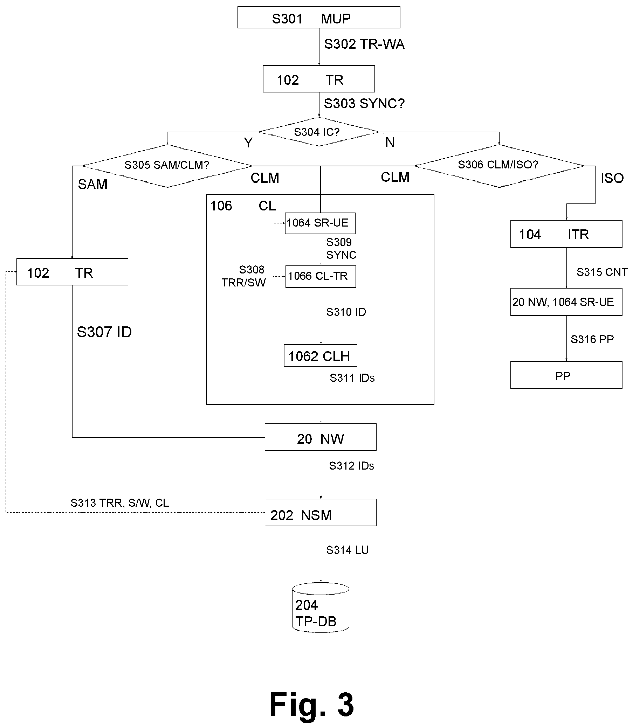

The time of flight (ToF) corresponds to a duration from when a data packet transmitted by a transmitter (Tx, e.g., access point/device) to when the same data packet is received by a receiver (Rx, e.g., a mobile phone/device). Note that this method takes only the forward path (i.e., Tx to Rx) into account and does not account for the reverse path (i.e., Rx to Tx). In this case, internal clocks of the Tx and the Rx (or multiple Tx and Rx) need to be time-synchronized such that the time stamp of the received packet can be assumed to be correct and compensated for any timing error caused by among others internal clock drifts and indeterministic clock offsets between Tx and Rx. Assuming the Tx and the Rx of Fig. 3 are synchronized, the distance D between the Tx and the Rx can be calculated by the following equation:

$$D = (t2-t1) * c$$

where, t2 is the time stamp of the reception and t1 is the time stamp of the transmission, and c is the speed of light. The time of flight can be calculated by Rx knowing the time stamp t1 (which was e.g. included in the transmitted message or communicated later) and by its own measured time stamp t2. The time of flight can also be calculated by Tx knowing the time stamp t2 (which was e.g. communicated later by Rx to Tx) and its own measured time stamp t1. The calculation of a single distance can be extended to two- and three-dimensional spaces for estimation of multiple distances, which can then be translated to estimates of location coordinates (both local and global) when the coordinates of multiple reference devices (either acting as the transmitter or the receiver) are known in advance.

The time difference of arrival corresponds to a difference in time stamps at which a data packet is received by a number of clock-synchronized receivers (Rx, e.g., access points/devices which are synchronous location reference stations), whereby the data packet was transmitted by an asynchronous transmitter (Tx, e.g., a mobile phone/device, or asynchronous location tag for which the location coordinates are to be determined). Note that the roles can be the other way around, e.g., the mobile phone/device may be an asynchronous Rx and the access points/devices may be synchronized transmitters. Note that a single transmission of a data packet by the transmitter will be received concurrently by several synchronized receivers placed within a coverage area of the transmitter. It is important that the receivers are clock-synchronized and that the location coordinates of the receivers are known to a central location server, whereas the transmitter for which the location coordinates are to be determined may not be synchronized either with other transmitters or with the receivers. A central location server can receive the time of arrival of the data packet from each receiver i = 0 ... N and may compute the distance difference for any pair of receivers (i, j) for a specific transmitter based on the following equation:

$$\Delta d_{ij} = (d_i - d_j) = \Delta t_{ij} * c$$

where, c is the speed of light and $\Delta t_{ij}$ is the difference in arrival times between receiver i and receiver j, $d_i$ is the unknown Tx-to-Rx distance for a receiver i, $\Delta d_{ij}$ is the difference in Tx-to-Rx distances between a receiver i and a receiver j. The calculation can be applied to two- and three-dimensional spaces for estimation of distance differences, which can be translated to location coordinates (both local and global) when the coordinates of the receivers are known in advance. Note that the transmitters are not able to calculate its own location locally on the device and only the location server can calculate the location of a transmitter using a localization infrastructure and a network of synchronized receiver nodes. Note that the location server may be located on one of the clock-synchronized receivers. The location of the transmitter can be communicated (e.g. to an application, to the transmitter, or to one or more receivers) via a separate communication channel or can be amended in one of the responses from the receivers to the transmitter in the same channel used for transmitting the data packet.

Alternatively or additionally, the receiver may send its measurements (e.g., time of arrival information) rather than a calculated distance and/or angle to the transmitter or a location server that will calculate the resulting distance and/or determine the resulting location coordinates. Some standardized mechanisms using a ToF difference based technique include Observed Time Difference of Arrival (OTDOA) as defined in 3GPP TS 25.305 and TS 36.133, and Uplink Time Difference of Arrival (UTDOA) as defined in 3GPP TS 25.305, typically based on a position reference signal (PRS) or sounding reference signal (SRS).

In addition to the time-based distance estimation, the angle of arrival is derived from phase information of an RF signal received at a receiver using an antenna array, which can be used to estimate at least one of the elevation angle and the azimuth angle at which the signal was received. This angle information can be used to determine the direction from which a signal was transmitted.

Furthermore, an angle-of-arrival concept is based on a phase difference consideration. The angle of arrival of the incoming RF signal can be calculated as follows. In principle, a receiver with at least two antennas with different phase of reception $\varphi 1$, $\varphi 2$, separated by a distance d, can determine the phase difference $\Delta\varphi$ of the received signal at the receiver and then use it to estimate the angle of arrival based on the following equation:

$$\Delta\varphi = [\varphi 1 - \varphi 2] = 2\pi \left[ (d\cos\theta_1)/\lambda \right] + 2k\pi$$

where, $\theta_1$ is the angle of arrival to be estimated, k is the wave number which can be calculated by k=2πλ, where λ is the wavelength of the RF signal calculated by λ =c/f, where c is the speed of light and f is the radio frequency of the signal.

The angle of arrival of the RF signal at the receiver can be estimated using a naive approach based on the measured phase difference using the following equation:

$$\cos\theta_1 = [(\Delta\varphi/2\pi) - k] * [\lambda/d]$$

Note that in addition to the approach described above, there are several well-known approaches available to calculate the angle of arrival of an RF signal including but not limited to Bartlett beamforming (cf. M. S. Bartlett: "Smoothing Periodograms from Time-Series with Continuous Spectra"), Multiple Signal Classification (MUSIC) (cf. https://en.wikipedia.org/wiki/MUSIC (algorithm)), distortion estimation (cf. J.Capon: "High-resolution frequency-wavenumber spectrum analysis", Proceedings of IEEE, Vol. 57, issue 8), and signal and noise subspace estimation. Other complex estimation of AoA may use more than two antennas at the receiver, which enables only one receiver instead of three synchronous receivers to obtain both angle and distance measurements based on a RF signal transmitted by an asynchronous transmitter with a rather simple hardware and single antenna. Similarly, the angle of departure (of the signal at the transmitter) can be determined and used for ranging/position estimation in case the transmitter uses multiple antennas.

The process of obtaining location coordinates of a device and using a mapping function to locate the device on a map is also offered by location services (LCS) provided in 3GPP systems, where a base station may act as a synchronization source and location coordinates of the devices are obtained based on radio parameters and special messages using a variety of positioning methodologies as described e.g. in 3GPP specification TS 23.271 *"Functional stage 2 description of Location Services (LCS)"*, Rel-16, for 4G, and 3GPP specification TS 23.273 "5G System (5GS) Location Services (LCS); Stage 2", Rel-17, for 5G.

A typical difference between the location service and ranging service offered by the 3GPP system is that the location service may measure geographical coordinates of a device within the coverage area of a cell (e.g., 1-5km) and provides good accuracy in outdoor environments where line of sight (LOS) is possible with the base station and the communication path can be fairly modelled and accounted for using channel models of urban and rural environments, whereas the ranging service may measure a distance and/or angle between two devices within a short range (e.g., 20m) and provides good accuracy in outdoor and especially indoor environments where two ranging devices can also be in line of sight (LOS) with each other.

The functionality of the location service and ranging service may be combined to offer e.g. a location service with improved accuracy and better indoor position estimation.

Note that a location service may also offer ranging services, e.g. in case the location of two devices can be observed/determined for example through GNSS, the distance and/or angle between the two devices can be calculated and may be exposed as part of a ranging service that may allow a device to request its distance and/or angle between itself and another device. In such case, the two devices may still be requested to perform ranging measurements between each other to improve the accuracy of the distance and/or angle between the two devices or for determining deviations to the observed/determined location.

A translation of distance to coordinates can be achieved e.g. based on ranging measurements by which a first device A can obtain a distance (d) and the angle (tc) towards a second device B. If the coordinates of the device A are known, and its orientation with respect to the coordinate system is known, the distance and angle measurements between the device A and the device B can be used by the device A to obtain the coordinates of the device B.

For example, in case of geographical coordinates expressed in radians, the latitude (lat1) and longitude (lon1) of the device A are assumed to be known. Then, the geographical coordinates (lat2, lon2) of the device B can be calculated using the following equations when using a spherical-Earth approximation model:

$$lat2 = asin(sin(lat1)*cos(d)+cos(lat1)*sin(d)*cos(tc))$$

$$dlon=atan2([sin(tc)*sin(d)*cos(lat1)], [cos(d)-sin(lat1)*sin(lat2)])$$

$$lon2=[mod(lon1-dlon+\pi, 2*\pi)]-\pi$$

Here the distance d is expressed as a relative distance equal to the distance measured between A and B divided by the average radius of Earth.

As another example, in case of a local 2D Cartesian coordinate system used for an area the X and Y coordinate of the device A (x1 and y1 respectively) may be assumed to be known. Then, the X/Y location coordinates of the device B (x2 and y2 respectively) can be calculated using the following equations:

$$x2 = d * cos(alpha) + x1$$

$$y2 = d * sin(alpha) + y1$$

where all coordinates and distance d are expressed in meters and the angle (alpha) towards device B was measured by A.

Alternatively, translation of distance to coordinates of a coordinate system may be done using other concepts, such as reverse Havershine formula, length of degree, Molodensky's method and block shift method, depending on the required accuracy and the type of coordinate systems used by the application.

Current techniques for ranging and position estimation can be improved in the following areas:

i. Location accuracy is highly dependent on signal path loss and degrades with loss of signal quality in indoor and deep indoor environments, where cellular coverage is very poor. Moreover, in remote outdoor environments, where the number of base stations is limited and results in a sparse to no signal coverage, the accuracy of location services becomes poor. In such areas, depending on the positioning methods used, trilateration or triangulation of a mobile device (e.g., UE) may require a longer initial latching time to be able to simultaneously receive at least three different signals from at least three different base stations. If the mobile device is moving in such poor coverage areas, continuity and reliability of location services offered by base stations may become severely disrupted, resulting in a service that becomes non-usable for real time location tracking.

ii. Ranging accuracy in outdoor environments depends largely on channel variability and reflective properties of objects surrounding the devices that carry out ranging operations. In indoor environments, a user of a mobile device (e.g., UE) can fairly control the environment with respect to objects and surrounding environment prior to ranging between two devices, whereas in outdoor environments it is uncertain to have control over the environment and more often it will negatively impact ranging accuracy. In addition, the movements of mobile devices in outdoor environments may also have a large impact on ranging accuracy due to the probable Doppler effect in the RF propagation channel. Ranging measurements between two devices in an outdoor environment may thus become non-usable due to largely deteriorating effects in the RF channel.

Some use cases may require translation of ranging measurements into location coordinates, which enables UEs that are not capable of using a positioning service or an additional positioning module to get a location coordinate derived from ranging information. In addition, devices with very poor positioning accuracy especially in indoor environments may benefit from ranging, such that the positioning accuracy is increased from hundreds of meters to sub-meter accuracy in indoor and/or out of coverage environments. Moreover, accurate positioning and continuous tracking of low power IoT devices is a requirement for yet another use case, which can enable adaptive delivery of quality of service (QoS), e.g., high bandwidth is offered at a location X, whereas only low bandwidth is offered in location Y, to a mobile UE depending on the location. Some of the identified suitable use cases may require formation of a cluster of UEs based on location information to deliver location based QoS to a group of UEs.

It is important to note that throughout this disclosure, at places where a ranging and/or positioning concept is mentioned, either one of the above ranging and/or positioning methods or combinations thereof, or other ranging or positioning methods known to the skilled person can be used.

In the following, embodiments are described, in which clustering of similar trackers is used to reduce power consumption.

Li Manman et al.: "Energy-Efficient Dynamic Clustering for IoT Applications: A Neural Network Approach", IEEE Eighth International Conference on Communications and Networking (ComNet), 27-30 Oct. 2020 (DOI: 10.1109/ComNet47917.2020.9306092) describes a use of dynamic cluster formation for energy efficient data transmission in Internet of Things (IoT) networks. Neural network and Copula theory are used to process information quantity based on power demand by individual clusters. This avoids information redundancy and waste of resources caused by repeated construction of similar type of clusters (as in conventional methods). According to power requirement, nodes are divided into two initial clusters based on applications and compared with set thresholds. These are then used to assign logical values to the nodes in the cluster and thereby effectively utilize the information in the cluster and balance inter-cluster cooperative communication energy efficiently for IoT applications.

According to Nathalie Barbosa Roa et al.: "A novel algorithm for dynamic clustering: properties and performance", 15th IEEE International Conference on Machine Learning and Applications (ICMLA), Dec 2016, Anaheim, United States. pp.565-570 (10.1109/ICMLA.2016.0099.hal-02004417), the likelihood of a given node joining a given cluster depends upon the range of interaction (among other parameters).

Similar behavior has also been investigated in Damian Roca et al.: "Emergent Behaviors in Internet of Things: The Ultimate Ultra-Large-Scale System", IEEE MICRO, SPECIAL ISSUE IOT, in the context of 'platooning' for smart devices (e.g., autonomous vehicles).

More broadly, many types of soft information (such as specific networks access, etc.) have been proposed for localization of things (LoT).

According to various embodiments, low-power asset trackers of a tracker control system (or tracking system) are enabled to reduce the number and/or energy cost of their network transmissions while still enabling a central server in a telecommunications network to calculate their location, e.g., by mutually "contact tracing" other nearby asset trackers, in a protocol which allows the range and other parameters of the contact tracing to be at least partly determined by a network-side entity based on only intermittent communications with a subset of the trackers.

It is noted that the purpose of communication with asset trackers may not only be a calculation/estimation of the tracker location, but also at least one of retrieval of identities, retrieval of asset type and retrieval of a sensed value.

It is further noted that the optimization goal may not only be reduced energy or less network transmissions. It could also be lower latency (because there is no multi-hop communication) and/or higher reliability (because all or more trackers are reachable).

By controlling the distance range over which asset trackers register additional contacts (via controlling the transmit power), a network-side server or application can maintain and manipulate a statistical model giving location and other details (such as usage status) for each tracker.

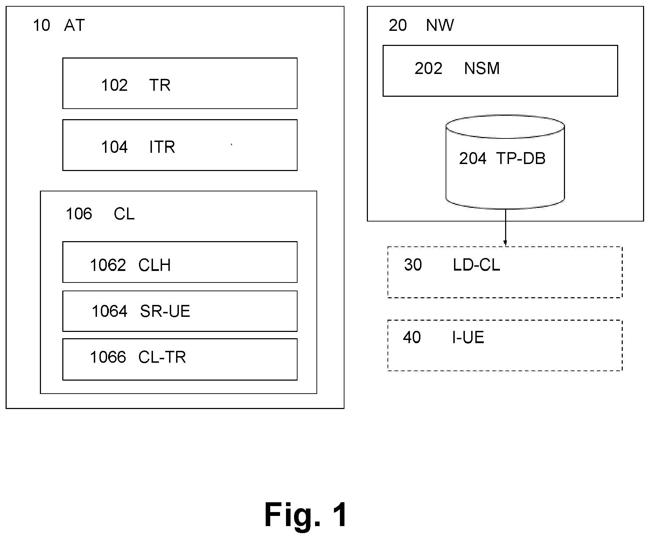

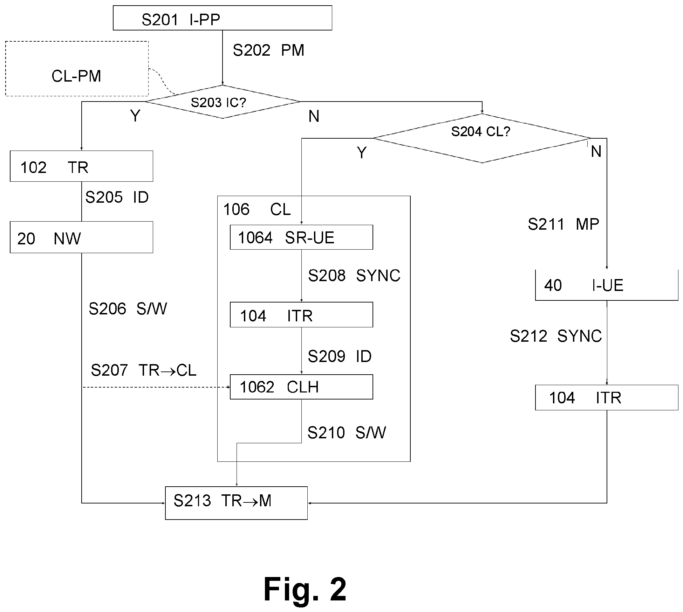

In the following, various embodiments are described. Further details of their hardware components are described later with reference to Fig. 1 and further details of their procedural and signaling steps are described later with reference to Figs. 2 to 5.

On initial switch-on, or as required during use, an asset tracker enters a provisioning mode, in which it attempts to discover a network (e.g., by listening for synchronization signals and Master Information Blocks (MIB), System Information Blocks (SIBs) or beacons from nearby access devices) and/or local trackers which are part of a cluster and therefore broadcasting synchronization signals (which may be synchronization reference UEs (SyncRef UEs) as defined e.g. in 3GPP specification TS 38.133, or an alternative implementation providing similar functionality). For simplicity, the following description uses the term "SyncRef UE" while it might mean also an alternative implementation providing similar functionality.

When the asset tracker has found a suitable network or SyncRef UE and set up provisioning by receiving suitable basic communications scheduling, the network (or a cluster head) provides the asset tracker with data specific to the present system, including intended sleep/wake cycles, tracking range, and optionally other setup details (e.g., fraction of wake cycles in which to transmit uplink communications to the network).

The asset tracker transmits an identity (ID) over a local-area protocol using the received transmission details, either individually or as part of a cluster. It also listens for received IDs. The ID may have been configured during the above setup or during manufacturing and is expected to be unique in the context of the local-area protocol.

The asset tracker may also transmit other information, e.g., information about at least one of the type of asset it is attached to, features of the asset including real-time features of the asset such as a sensed value, and location-related information about the asset.

When the asset tracker is in the coverage area of the network (in-coverage), it (or a cluster head if the asset tracker is in an existing cluster) reports to the network after a scheduled delay time (which can be configured by the network or pre-set) its own and its received IDs and (if available) location, a parameter indicating signal strength (such as a received signal strength indicator (RSSI) or a reference signal received power (RSRP)) or a parameter indicating a position, distance, angle or position, distance or angle measurement (e.g., a coordinate in a coordinate reference system, a distance in meters, an angle in degrees in relation to a reference direction/line, or a TDOA timing), and possibly other details such as battery life (as described in detail below). This type of information is to be understood as an example of "location information" or "location-related information".

A network-side model maintained at the network or an application uses the received IDs and/or known locations of some asset trackers to calculate a known or inferred location of all asset trackers (including any 'unseen' asset trackers) at each time-step. In some cases, e.g., where a calculated location for an unseen asset tracker appears to be close to that of one which has recently reported or when the number of received IDs is smaller than the number of expected IDs, the network may optionally contact either of the relevant asset trackers and instruct them to modify their tracking range, modify their sleep/wake behavior, reduce the number of uplink transmissions, and/or to form a cluster. By doing so, the network-side model or the application may optimize, e.g., between location certainty and/or energy usage of the asset trackers (e.g., by reducing the frequency and range of uplink transmissions) and/or reliability.

The network may retain an ongoing estimate of the locations of asset trackers, clusters, and status data (e.g., battery life and/or energy production status of an integrated energy-harvesting element) which is provided (surfaced) to an appropriate application. This may be done continuously or based on a (one-time) request.

When the asset tracker is not in the coverage area of the network (out-of-coverage) and is already part of a cluster, it may continue to operate under a cluster mode. It is to be noted that some asset trackers in the cluster may be in coverage while others in the same cluster are out of coverage). The aim is to maintain knowledge of members of the cluster and to remain discoverable to any network if the asset trackers move into coverage at least after a certain delay period.

One asset tracker of the cluster may act as a source of synchronization signals for the cluster (i.e., it functions as the SyncRef UE). This task may be shared dynamically between the trackers of the cluster based on battery or hardware considerations.

When the asset tracker is not in the coverage area of the network (out-of-coverage) and not part of a cluster, it becomes an isolated asset tracker. In this case, it may broadcast, e.g., its (protected) ID and/or pseudo ID and/or other relevant information such as a tracker feature using last-available settings and listens for any nearby network or cluster head (with the aim of joining a network cell or cluster). The broadcast may be triggered upon receipt of a triggering signal (e.g., discovery or synchronization message) from a nearby tracker (e.g., UE) or access device. Protected may mean encrypted (e.g., by means of a NR encryption algorithm such as NEA1) or integrity protected (e.g., by means of a NR integrity algorithm such as NIA1). In the rest of the description, the asset is said to broadcast its ID without loss of generality. The likelihood of discovery of an isolated asset tracker can be traded-off against battery usage by changing the relative time it spends with active receiver (Rx on) and/or the transmission power.

Furthermore, the communications frequency and other settings may be altered automatically by the asset trackers or clusters based on contextual cues (e.g., they may 'wake' up when movement is detected or enter a 'storage mode' if the same cluster members are observed repeatedly).

When available to the network, IDs and locations are reported and used to update a global tracker location model as explained above.

Individual asset trackers and/or the cluster head may keep received IDs in a memory when they are out of coverage of the network and report them later when they are able to do so (e.g., when they get network coverage again).

Optionally, the network may actively search for clusters which are out of coverage by using any available nearby asset trackers to attempt to contact the cluster head (e.g., by temporarily increasing their tracking range).

Hence, according to various embodiments, an asset tracker control system (asset tracking system) is provided, in which asset trackers may conserve energy while allowing a network-side model or application to retain information about their location, by use of a local 'contact tracing' protocol with low transmit power, supplemented by less frequent contact to the network.

The contact tracing protocol can be adapted to save energy at the asset trackers in at least one of the following three ways:

    i. It is configured to reduce on average the number and/or range of uplink communications required for any given asset tracker;

    ii. It is configured to allow for a network- or cluster-controlled sleep period (which may be set to be longer than a wake period), where the trade-off between the length of the sleep period versus the location accuracy can be controlled by the network or cluster head;

    iii. It is configured (e.g., in a cluster mode) to allow asset trackers in a cluster to maintain contact to a network by delegating the task of maintaining contact to the asset tracker with the longest remaining battery life.

In an embodiment, the contact tracing protocol may further be configured to allow a network-side model (and/or a local asset tracker such as a cluster head) to optimize between location-finding, battery life and other considerations by changing the tracking range and sleep/wake cycles of the asset trackers. Optionally, these parameters may be altered/adjusted independently by the asset trackers based on data such as location, detected movement, etc.

In a further embodiment, the asset tracking system may be configured to retain at least some functionality even when out of network coverage, by enabling clusters of asset trackers to be provisioned and maintained in such a way that the cluster may be discoverable to the tracking system at suitable times, and report information about contacts which occurred with asset trackers while out-of-coverage, which would otherwise not be available to the network.

Fig. 1 schematically shows a block diagram of an asset tracking system (asset tracker control system) according to various embodiments.

Each of a plurality of trackers (TR) 102 of an asset tracker group (AT) 10 of the tracking system comprises asset tracking hardware capable of communicating on a telecommunications network (e.g., a 3GPP 5G network or other wireless network) which, in use, may be affixed to a physical object for which the location (and possibly other information such as usage state) should be tracked. More specifically, each tracker 102 may contain required networking hardware and software in addition to other hardware such as battery, antenna, central processing unit (CPU) etc. and optional additional hardware such as inertial sensors, additional location and environmental sensors and the like.

Furthermore, each tracker 102 may be configured to support various modes of operation including a "sleep" period (during which radio frequency (RF) and other networking processes of the tracker 102 are substantially shut down or in an idle mode or in a power savings mode, wherein at least a local clock remains operative) and a "wake" period (during which at least some of the tracker hardware is active to allow a desired functionality).

The trackers 102 may be configured to communicate using both standard uplink and/or downlink protocols and device-to-device (D2D) protocols as initially explained. A transmit power used for D2D communication may be variable and may be used to modify the range over which nearby asset trackers are expected to be able to receive D2D signals from the tracker 102 (the "tracking range").

Optionally, the trackers 102 may be capable of more advanced ranging techniques, e.g., two-way ranging and others as initially explained.

Optionally, hardware with additional capabilities, such as an installer's UE (I-UE) 40 or other mobile device, may be used by an installing person during a provisioning process, as described later. An example of suitable hardware of the installer's UE may include a smartphone or laptop with network access.

Furthermore, the asset tracking system may comprise a network (NW) 20 and a network-side model (NSM) 202.

The network 20 may be a telecommunications network such as a 5G network and asset trackers 10 may be within range of the network 20 ("in coverage") or outside its range ("out of coverage").

The network 20 may provide service to (mobile) devices (e.g., 5G UEs) by using base stations (e.g., 5G NR gNBs, or LTE eNBs).

In addition to normal RF components, the network 20 may contain suitable computational hardware and software to run statistical models (e.g., the network-side model 202) based on e.g. the location or approximate location of the trackers 102 of the asset tracker group 10.

The network-side model 202 may be hosted in a network function of the network 20, such as a network function of a 3GPP 5G core network or an application function (integrated through a service-based architecture (SBA) interface) or an external application connected to the core network through a Network Exposure Function (NEF).

Data obtained from and/or related to and/or required by the network 20 and the network-side model may be stored in a tracker position database (TP-DB) 204 which may provide (surface) the data as necessary to suitable authorized applications (e.g., installed and/or used by owners of the trackers 102) and/or other downstream location data clients (LD-CL) 30.

Additionally, the asset tracking system may comprise a cluster (CL) 106, which may be a group of at least two cluster trackers (CL-TR) 1066 physically co-located within a certain distance (the "cluster range"). The cluster range can be varied dynamically by the network 20 or the cluster 106. At least one of the cluster trackers 1066 may be configured to be a cluster head (CLH) 1062 that takes on additional responsibilities for maintaining information about members (membership information) of the cluster 106 and reporting it to the network 20 when requested or when scheduled.

The cluster range may be related to the transmit power used by the cluster trackers 1066 in the cluster 106 to communicate and may be modified by changing a corresponding parameter.

Optionally, more advanced ranging techniques (including any suitable trilateration or localization techniques, as described initially) than simple signal-strength measurements may be used to define and control the cluster range.

The cluster 106 may exist either entirely in-coverage (i.e., all cluster trackers 1066 of the cluster 106 are within the coverage area of the network 20 (e.g., network cell)), partially in-coverage (where some cluster trackers 1066 of the cluster 106 are in coverage but others are out of coverage), or entirely out-of-coverage of the network 20.

When out-of-coverage, one member of the cluster 106 (which may or may not be the cluster head 1062) may be configured to take over an additional role of synchronization reference UE (SR-UE) 1064 (the "SyncRef UE") which broadcasts synchronization reference signals to be used by other cluster trackers 1066 during their wake periods.

In an embodiment, the role of the SyncRef UE 1064 may correspond to that defined in 3GPP specification TS 38.133 (and elsewhere).

In another embodiment, the synchronization reference role may be an alternative role, e.g., a more low-power implementation of providing time synchronization reference signals to other cluster trackers 1066.

The SyncRef UE 1064 may be chosen to be a cluster tracker 1066 which has higher precision timing available to it even when being out of coverage of the network 20 (e.g., by having a global navigation satellite system (GNSS) chip available).

When the cluster 106 is in partial network coverage, it is preferable for the role of SyncRef UE 1064 and the cluster head 1062 to be undertaken by one of the cluster tracker(s) 1066 which is in network coverage. This allows the SyncRef UE 1064 to keep the entire cluster 106 within synchronization with the network 20 as well as locally in synchronization and allows all cluster trackers 1066 in the cluster 106 to maintain contact to the network 20 through the cluster head 1062.

In the case where multiple cluster trackers 1066 in the same cluster 106 are in coverage, they may choose a suitable SyncRef UE 1064 and cluster head 1062 from the in-coverage cluster trackers 1066 as described later in the cluster mode section of a main use phase procedure.

A tracker that is not part of the cluster 106 but otherwise fully working is termed an "isolated tracker" (ITR) 104 when it is out of coverage of the network 20.

In the following, a process for localization of trackers is described based on Figs 2 to 4.

The process is designed to save energy at the trackers 102, cluster trackers 1066 and/or isolated trackers 104 e.g. by reducing the number and frequency of their uplink transmissions (and time of receipt of downlink information) and therefore, increasing the lifetime of battery-powered trackers or enabling battery-less trackers. The process is also designed to retain at least some functionality when the trackers are out of coverage of the network 20.

In embodiments, the process for localization may comprise two phases with related sub-processes, namely an initial provisioning phase and a main use (tracking) phase.

It is to be noted that both sub-processes may proceed differently depending on whether the trackers in question are in coverage, partially in coverage, or out of coverage of the network 20.

Fig. 2 schematically shows a signaling and processing diagram for the initial provisioning process according to an embodiment.

In step S201, the initial provisioning phase (I-PP) is initiated.

After an initial switch-on in step S201 or as required during use, trackers 102 of the asset tracker group 10 may be configured to enter a provisioning mode (PM) where they attempt to establish contact to the network 20 or a nearby cluster 106 in order to register with a location service.

In addition to the initial switch-on, the trackers 102 may be configured to automatically re-enter the provisioning mode during the main use phase as required (for example, after re-entering network coverage following a period of out-of-coverage).

A tracker 102 may also be manually re-set to the provisioning mode by an external operation (e.g., using the installer's UE 40). This may be required for example to register a change of ownership or status of the tracker 102.

A registration of the trackers 102 to the network 20 may be based on network credentials or application specific credentials that can involve at least a tracker identity and/or secret keying materials.

The provisioning in the provisioning mode may involve the configuration of the tracker 102 for tracking purposes of a specific application upon successful registration. This provisioning step may involve the (re-)configuration of a (unique) tracker ID and/or keying materials associated with the application.

Optionally, in embodiments, the tracker 102 may be configured to opt for a use of a cluster provisioning mode (CL-PM) in certain scenarios even if the tracker 102 is in coverage of the network 20. As an example, cluster provisioning may be relevant where a large number of trackers 102 are to be provisioned at once and/or where high expected mobility (and therefore high chance of coverage loss) is expected for the trackers 102, e.g., in case of a pallet of goods on a truck, where each box contains a tracker 102. In such cases, the installer's UE 40 may decide to configure the tracker 102 to use the cluster provisioning mode even where network contact is available.

In step S203, the tracker checks whether it is in coverage (IC) of the network 20. If network contact is determined to be possible, the tracker 102 contacts the network 20 in step S205, e.g., via existing long-range protocols under the 5G or any other wireless communication standard. Standard uplink downlink communications as well as specialized protocols (e.g., NB-IoT) may be used. In general, the long-range protocol may refer to a protocol that allows a direct wireless communication of a tracker with an access device, e.g., an access point or a base station, connected to the core network.

Furthermore, in step S205, the tracker communicates to the network 20 its data including an identity (ID) of the tracker (e.g., a unique ID number or an identity (e.g. Subscription Concealed Identifier (SUCI), see TS 33.501) derived from a unique device identity (such as a Subscription Permanent Identifier (SUPI) or an International Mobile Subscriber Identity (IMSI)) and any available installation or usage data (such as location, owner, physical asset to which it is attached, specialized hardware resources, remaining battery life, etc., i.e., the "metadata")

In embodiments, the ID may be permanently associated to the tracker 102 upon manufacture (e.g., stored in a hardware on the tracker 102 or in a (embedded) smart card that can be connected to the hardware). This option may provide for reduced complexity, for example by using the tracker's international mobile equipment identity (IMEI) number but may involve security and/or privacy issues due to an inability to change the ID following any data breach.

In other embodiments, the ID may be generated by the tracker 102 or by the network 20 either sequentially or according to any other appropriate pattern during the provisioning process (e.g., during policy and authorization provisioning by the Policy Control Function (PCF)). Any algorithm to generate IDs must ensure that they are unique across all trackers that may become member of the asset tracker group 10 or cluster 106. In the subsequent text the term "unique ID" is used to denote an ID that is at least unique within the asset tracker group 10 or cluster 106.

In an example, the unique ID may be a user information ID exchanged in a Direct Communication Request (DCR) message over PC5/sidelink.

An advantage of dynamically generating unique IDs is that if a data breach occurs then trackers 102 can have their unique IDs 'reset' without any hardware changes.

In an embodiment, the tracker 102 may set a logical flag during any subsequent return to the provisioning mode which may occur after loss of network coverage to inform the network 20 that it does not require a new random ID as the unique ID (to avoid accidental loss of information).

In an embodiment, the unique ID may be generated by each tracker 102 by deriving it from a unique device identifier (e.g., SUPI/IMSI/IMEI), e.g. in a manner similar to deriving a Subscription Concealed Identifier (SUCI), whereby the core network (e.g., authentication server function (AUSF) or unified data management (UDM) in case of SUCI) may be able to deconceal the identity (e.g., SUPI) of the tracker from which the unique ID was derived. In an embodiment, the unique ID may be generated or protected by each tracker 102 by a pseudo-random generation function (whereby the function/algorithm/configuration options may be predefined or pre-configured or downloaded on the tracker 102 e.g. by/from the network or by/from an installer UE), whereby the pseudo-random generation function may take a time reference (e.g., coordinated universal time (UTC)) as input, and/or whereby the pseudo-random generation function or an identifier that identifies the specific pseudo-random generation function and which inputs are used by that function are shared with the network and/or cluster head and/or other trackers, so that they can come to the same ID if the same inputs are applied).

Optionally, the unique ID may be prepended or appended or multiplexed with an identity of the cluster/asset tracker group.

In further embodiments, the unique ID may be assigned to the tracker 102 prior to provisioning by an installer (e.g., using the installer's UE 40) using the sequential or other algorithm mentioned above.

Optionally, the unique ID may be protected against privacy attacks, tracking attacks, etc. more difficult. A way of protecting the unique ID may be by encryption (e.g., using a public key scheme) such that the unique ID transmitted by the tracker 102 can only be decoded by the network-side model 202 (which holds the appropriate private key) but not any intermediate trackers that receive it.

In subsequent step S206, the network 20 communicates to the tracker 102 data including synchronization, timing and timing/frequency resources (e.g., sleep and wake (S/W) times) to be used to communicate with other trackers known or expected to be nearby. The network 20 might also communicate other parameters such as a group identifier and/or security keying materials to enable security communication in the group.

Optionally, step S206 can be skipped if a suitable default data set is already stored in the tracker 102.

In an embodiment, sleep/wake timings and frequency resources may be common within a given cell (or larger area) of the network 20 for initial provisioning (e.g., based on some default values). They may however be modified later during use as described below in connection with the main use phase.

Remaining synchronization and resource allocation necessary for communications when in-coverage may be handled substantially by the network 20 using existing protocols (e.g., standard communications or NB-IoT).

Optionally, in step S207, the tracker may be instructed by the network 20 to join a cluster 106 by using the cluster provisioning mode. As an example, this may be the case if trackers 102 are already members of a cluster 106 prior to the initial network contact. In this case, one tracker of the asset tracker group 10 (which may preferably be the cluster head 1062) may report the unique ID details for all trackers 1066 of the whole cluster 106.

Optionally, a cluster ID may be dynamically assigned to the cluster 106 by the network 20 or an installer's UE 40 to assist in tracking. Similar to the individual unique IDs of the trackers 102, the cluster ID may have encryption or security features attached to it. For example, a so-called cluster key might be assigned to attach a Message Integrity Code (MIC) to the exchanged unique IDs that allows the cluster head 1062 to verify that they are valid. The cluster key may be a group key, or pairwise keys between each pair of cluster trackers 1066.

Having received the required sleep/wake cycles and other data, the tracker 102 begins in step S213 to (periodically) broadcast its unique ID as instructed and the procedure proceeds to the main use phase (M).

Otherwise, where it is determined in step S203 that network contact is not available, the procedure branches to step S204 where it is checked whether the tracker 102 is member of a cluster 106 (cluster mode) or a nearby cluster is discoverable.

Where the tracker 102 was not formerly part of a cluster 106 (e.g., initial provisioning for an isolated tracker), it becomes an isolated tracker 104 and attempts to discover any nearby clusters 106 or network 20 by setting its receiver to active on the relevant (e.g., default and/or preconfigured) frequency bands and remaining active for a given length of time and searching for synchronization signals from any SyncRef UE 1064 or the network 20. The length of time to remain active may be chosen from a predetermined set or configured automatically by the isolated tracker 104.

The likelihood of discovering a cluster 106 will increase the longer the isolated tracker 104 remains active, at the cost of (energy) resource usage. In an example, to facilitate discovery by isolated trackers 104, a default minimum time could be specified during which the tracker acting as SyncRef UE 1064 for any cluster 106 must be in a wake mode (even if the remaining trackers 1066 in the cluster 106 are not scheduled to the wake mode). If, for example, this time were once per hour, then any isolated tracker 104 would only need to remain active for one hour.

Where the isolated tracker 104 detects a SyncRef UE 1064, it may useinformation received from the SyncRef UE in the synchronization signals (SYNC) in step S208 to contact the cluster head 1062 to join the cluster 106 in step S209 and provide its unique ID and metadata.

In step S210, the cluster head 1062 provides the (formerly isolated) tracker with sleep/wake (S/W) cycles for future communications with the cluster 106.

Otherwise, where the isolated tracker does not discover a SyncRef UE 1064 in step S204 during its active period, it may re-attempt provisioning at defined intervals or immediately in the case of certain detected events (e.g., motion, or change in temperature above a threshold) which would indicate that it has likely moved.

As another option, the isolated tracker 104 may also attempt to actively contact any nearby SyncRef UEs 1064. This may be, for example, achieved by broadcasting its own SyncRef UE signals at high power. Where any nearby SyncRef UE 1064 receives such signals, it may temporarily increase its own transmit power to allow the isolated tracker 104 to join the cluster 106, as described above in connection with steps S208 to S210.

The power level and repetition timing of such active broadcasts by the isolated tracker 104 may be balanced against its remaining battery life and its estimation of the likelihood of there being a nearby tracker to discover (for example, because the isolated tracker 104 was part of a cluster 106 during the last wake period, indicating that it may have fallen just out of range).

In embodiments, in order to facilitate cluster discovery by isolated trackers 104 in step S204, a set of default frequency resources may be reserved for use by SyncRef UEs 1064 which are in an out-of-coverage state, similar to the reserved resources used for semi-persistent scheduling for mode 3 or mode 4 V2X (e.g., in 3GPP specification TS 36.331 and elsewhere).

Where the isolated tracker 104 was formerly part of a cluster 106 (within a recent time-period which can be configured), the isolated tracker 104 may preferably attempt to specifically re-discover its former cluster 106 in step S204 prior to attempting to discover other clusters using the above options. This scenario may occur for example because the isolated tracker 104 has left the cluster 106 or because the isolated tracker 104 acting as SyncRef UE 1064 has left the cluster 106 and therefore the cluster 106 as a whole has lost synchronization during its wake period, despite most of the cluster trackers 1066 still being co-located.

In an embodiment, the isolated tracker 104 may follow a sequential procedure to attempt to re-establish contact with the cluster 106 in step S204, where the last-used SyncRef UE 1064 attempts to re-establish signaling for a given period of time, followed by other UEs according to an ordered list.

This way any given cluster tracker 1066 in the cluster 106 should be able to calculate how long (up to which maximum time) after a failed attempt to communicate during the wake period a synchronization reference signal should be receivable (visible). If no synchronization reference signal has been received during the entire period up to that maximum time, the cluster tracker 1066 knows it should try to become the SyncRef UE 1064 itself.

In an embodiment, a random delay may be added to the duration of each reconnection attempt to avoid any potential clash between two trackers with the same priority level in the list. In this case the delay may be capped at a maximum amount such that the trackers can still apply the maximum wait period calculation as above.

After waiting the maximum time expected based on the number of devices that were in the cluster 106 and its own position in the order, the cluster tracker 1066 can determine that it is an isolated tracker 104 and revert to the related procedural steps.

Where network contact is not possible and the isolated tracker 104 was not formerly part of a cluster, the procedure branches to step S211 where a nearby installer's UE 40 is activated to be used for manual provisioning (MP) and to act as SyncRef UE and cluster head to register the unique ID of the isolated tracker 104 and provide it with Sleep/Wake information and communications details or information about a cluster (e.g. cluster identity, cluster credentials) in step S212. For example, a group of trackers 102 may be manually provisioned for the first time and an operating person may use a smartphone to enable them to form a cluster 106 even though they are in an out-of-coverage state and none of them is acting as SyncRef UE 1064.

The procedure of the provisioning phase described above may be repeated as required by a tracker 102 or as instructed by the network 20.

Fig. 3 schematically shows a signaling and processing diagram for a main use or tracking phase according to an embodiment.

Having completed the provisioning process, the tracker 102 initiates in step S301 the main use phase (MUP) and may begin contact tracing in several modes which may include a standalone mode (which may be activated in an in-coverage state of trackers only) and a cluster mode (which may be activated in an in-coverage state or in an out-of-coverage state of trackers).

The tracker 102 which has been provisioned wakes up (enters a wake period) in step S302 and senses its network environment for any synchronization signals (SYNC) in step S303. Based on the sensing step S303, the tracker 102 determines in step S304 whether it is in a coverage area of a network (NW) 20 (in-coverage state).

If so, the tracker 102 determines in step S305 whether it is set into the standalone mode (SAM) or the cluster mode (CLM).

If the standalone mode is activated, the procedure branches to step S307 where the tracker 102 transmits (reports) its unique ID and optional metadata to the network 20, enters sleep cycles (periods) as set during the provisioning phase and/or updated by the network during the main use phase, and listens during wake cycles (periods) for received unique IDs with sleep and wake (S/W) timing and synchronization and resource allocation handled by the network 20, based on existing protocols, e.g., as described initially.

In embodiments, the tracker 102 may broadcast its unique ID during wake cycles using existing D2D protocols (e.g., as described initially), using one of the available synchronization signals provided by the network 20 to orchestrate the communications. It may also listen for received IDs of other trackers and may store each received ID alongside a time stamp and in addition may store an estimate of the received signal strength of the D2D transmission.

Optionally, the tracker 102 may use additional ranging information alongside or instead of a received signal strength (RSS) to label the received IDs. This may include two-way ranging techniques to the associated tracker (e.g., as initially described). This option is expected to give better precision on the range to each tracker at the cost of potentially increased power consumption. Optionally, the tracker 102 may advertise its capability for two-way ranging as part of its transmitted metadata, to enable other trackers to only attempt two-way ranging to other trackers known to be capable of it. Labeling the received IDs may be achieved e.g. by tagging the received ID information with metadata, where the metadata may be additional ranging information or additional RSS/RSSI/RSRP information, or both of these.

Optionally, each tracker 102 may perform RF signal measurements or process received MIBs/SIBs / sidelink synchronization signals / PC5 discovery messages, and may include information such as Cell-IDs, Tracking Area Identifiers (TAI), RSRP of neighbor cells, layer-2 or other identifiers received via PC5 discovery messages and/or signal strength of sidelink synchronization signals / PC5 discovery message and/or signal strength of different beams used by / received from an access device or other trackers (e.g. as indicated by Signal Synchronization Block (SSB) index) and/or information about which beam has the highest signal strength, as part of the information shared with other trackers. This information may be transmitted to the network and taken into account in the network-side model 202 for locating the trackers.

Optionally, the tracker 102 may also listen for commands from the network 20 or the network-side model 202 during its wake cycles. The network-side model 202 may receive from the network 20 in step S312 tracker IDs and metadata and may instruct the tracker 102 in step S313, if necessary, to increase the tracking range (TRR), alter the sleep/wake cycles (S/W) and/or join a cluster (CL).

Optionally, the network 20 may also set (selected or all) trackers in a listen mode. In this mode, the trackers wait until a request is received to reply with their unique ID. Trackers in direct connection with the network 20 may forward the request to other out-of-coverage trackers.

In an embodiment, during some fraction of wake cycles, or optionally during a dedicated wake cycle which may be reserved for uplink communications to the network 20, the tracker 102 may report data to the network 20 (e.g., in step S307), which may include at least one of its own unique ID, a D2D transmit signal power which the tracker 102 used during the last wake cycle (i.e., the tracker's tracking range, which may be logged against each individual transmission if the power varied during the wake cycle), its own location if available (e.g., via GNSS), and any received unique IDs and signal strength and metadata linked to those transmissions.

In an embodiment, the tracker 102 may report, e.g., in step S307, all unique IDs and associated signal strengths and/or metadata which have been observed since the last known and/or acknowledged network contact (whether this is one wake cycle or several ones). The unique IDs may be labelled with a timestamp such that the network-side model 202 can calculate an order in which they were received.

Optionally, the tracker 102 may report only those unique IDs from a specific number n of the last wake cycles or a specific number m of most recently received unique IDs (where n and m may be defined based on optimizing memory usage versus location certainty in the network-side model 202).

In an embodiment, the fraction of wake cycles to be used for network reporting in step S307 may initially be set to 100% or any other fraction. As the network-side model 202 increases its location certainty for the trackers, it may instruct them to modify (i.e., reduce) this fraction to conserve power by limiting long-range transmissions per unit of time (i.e., it instructs to reduce the transmit power of the unique ID transmissions).

In an embodiment, the fraction of wake cycles used for network reporting in step S307 may also be modified by the trackers themselves. For example, where a tracker receives no new unique IDs during a wake cycle (indicating likely static location or cluster membership), it may optionally reduce its network reporting fraction to conserve power (in such a scenario, the network 20 and/or a local tracker 102 may be configured to orchestrate a cluster, as described later).

It is to be noted that if a tracker receives no new unique IDs but only a subset of known unique IDs, the tracker may report that one or more previously known unique IDs are missing since this might give an indication to the network 20 that those trackers with those unique IDs are now at a different location, or do not have battery power anymore, or are in a different (radio) environment, or are now out of coverage, etc.

In an embodiment, the tracker 102 may report, e.g., in step S307, only the IDs and associated signal strengths and/or metadata which have newly been observed or that have not been observed since the last known and/or acknowledged network contact. To this end, the tracker 102 may keep information about the list of previously discovered other trackers and/or information about which trackers were already reported to the network. This may reduce the amount of data or frequency by which the data needs to be transmitted to the network. At some point in time, the network may ask the trackers to report all observed other trackers, in order to update/refresh the information known by the network or application and/or to check whether all trackers are accounted for (e.g., in the network model).

In a further embodiment, the network or cluster heads may send information about all tracker IDs currently accounted for by the network model or application and/or that are part of a cluster, possibly together with information about when a tracker ID was last seen/reported. Each tracker may decide based on this information whether it needs to (again) report a tracker ID. This decision may be further based on a pre-configured time limit or number of cycles and/or (maximum) change/variation in signal strength or (maximum) range/position change for which it is okay that a tracker ID is not reported again.

The network 20 passes the received unique IDs and associated metadata to the network-side model as input (step S312). The network-side model 202 uses this data to calculate an update (LU) of an ongoing estimate (approximation) of the location for each tracker (e.g., of the asset tracker group 10) and updates the tracker position database in step S314.

Optionally, the network 20 may also pass protected, e.g., encrypted, unique IDs and associated metadata to the network-side model 202 if it is up to the network-side model 202 to, e.g., decrypt them.

The network-side model 202 may use various techniques to estimate in step S314 the location of each tracker based on (partial) location data stored at the previous time step and newly reported received unique IDs from each tracker. For example, where a tracker has a well-known location (e.g., due to having GNSS hardware or due to a well-characterized location calculated by the network-side model 202 on the previous model time step or configured by an installer), it may be marked as an anchor point tracker. Then, any trackers whose unique ID was received by the anchor point tracker may be labelled as being located within a radius given by the D2D tracking range of the relevant transmission.

Optionally, the data received from a relevant counterparty tracker for the same transmission may be searched by the network-side model to identify matching unique ID transmission(s) from the same interaction. This may give additional information about the true range of the trackers during the transmission event. For example, if two trackers were using different transmit powers corresponding to a different tracking range and one was able to 'see' the other but not vice-versa, then a true range uncertainty (as encoded in the network-side model 202) may be reduced.

Where the transmit power is variable, the true tracking range may be calculated by a ratio between a (known) transmit power used and a (measured) received power received by the counterparty. For this purpose, trackers may append data indicating their used transmit power to each transmission and/or receivers may include data indicating their received signal strength along with reported received unique IDs.

Any received unique IDs reported in step S307 by the tracker 102 which are not anchor points (i.e., do not have a well-known ground truth location) may be used as additional constraints on the location via their own relationship to anchor point trackers, other trackers, and/or associated tracking ranges.

Optionally, additional features of the contact tracing data may also be used by the network-side model 202 to update its location estimate. For example, where two trackers traced each other multiple times during a wake cycle but with a changing apparent tracking range, the network-side model 202 may infer that the related trackers were moving (relative to each other). In this case, the network 20 may optionally instruct one or both of the trackers to take action related to the motion (e.g., actively search for the other after a time period in which it is expected to be still in range given the estimated velocity).

Where the contents of a tracker's unique ID memory are substantially similar over repeated reports, the network-side model 202 may infer that the trackers are persistently co-located. This may be true both for stationary trackers (e.g., in storage) or for those in motion (e.g., affixed to goods within the same truck).

As a further option, where available, additional features of reported metadata may also be used by the network-side model 202, to enhance its location estimate. Examples may include internal sensor data from the trackers (or co-located trackers) indicating motion, changing temperature, changing received signal strength of network transmissions (including those of different cells within a cellular network), etc. A change measured by such internal sensors that meets a pre-configured threshold may trigger a change in ID reporting frequency, may trigger the tracking range to be changed, or may trigger a connection to the network to request an update of the sleep/wake periods or an update of the tracking range or other parameters, or may trigger the device to go to provisioning mode.

By repeatedly performing at least some of the above additional assessment options for all available trackers at each time step, the network 20 may further constrain uncertainty in their estimated locations e.g. via multilateration techniques using tracking ranges and received unique IDs.

In an embodiment, the network-side model 202 (or the cluster head 1062 when the tracker 102 is set to the cluster mode, as described later) may be configured to further analyze estimated power consumption of each tracker with an attempt to optimize both power consumption and overall location certainty of all trackers by instructing, where necessary, the trackers to change the tracking range, uplink communication frequency, and/or the sleep/wake periods for subsequent transmissions (e.g., in step S313).

Examples of actions which allow the network-side model to reduce tracker energy consumption include increasing sleep and reducing wake cycles (this may be used for example where the network 20 has good knowledge of a given tracker because it has been tracked at a previous time step by a number of anchor trackers).

As explained earlier, a tracker 102 may join a cluster when instructed to by the network 20, because it is out of coverage and only has sight of a cluster, or due to other reasons (e.g., an installer may initially provision a group of trackers to form a cluster if they are known to remain together during expected use, with the advantage that they will work persistently even if they move out of coverage).

When it is determined in step S305 that the tracker 102 is in the cluster mode, the tracker 102 may take the role of a SyncRef UE 1064 of a cluster 106 and broadcasts in step S309 synchronization timing or reference signals (SYNC) during each wake cycle, which are used by other cluster trackers 1066 of the cluster 106 to orchestrate communications.

The cluster trackers 1066 communicate (report) their ID and metadata to other cluster members and received IDs and metadata to a cluster head 1062 in step S310. One of the cluster trackers 1066 also takes the role of the cluster head (CLH) 1062, e.g., storing accumulated unique IDs and metadata for the cluster 106 to be reported to the network 20 in step S311 when possible (available). These may be the same or different Trackers.

In an embodiment, initially on cluster provisioning, the network 20 (or an installer's UE 40) may act as both SyncRef UE 1064 and cluster head 1062. Subsequently, the selection of the role of the SynRef UE 1064 and/or the cluster head 1062 may be made by the cluster trackers 1066 of the cluster 106. In examples, this selection may be based on at least one of an availability of an external source of precise timing (e.g., GNSS), the highest remaining battery life and/or lowest average transmission power to the remaining cluster trackers 1066 of the cluster 106, a random decision (fallback option with the risk that the cluster's shared internal 'clock' may drift from the network time/clock). In other examples, this selection may (also) be based on the highest predicted "on" lifetime given the status of all cluster trackers 1066, including aspects like battery charge/capacity/life status but also status of an energy-harvesting function if available (e.g., a tracker with an active solar panel that has already produced energy for some hours is a good candidate). To this end, the cluster trackers 1066 may transmit information about their energy related status to other cluster trackers 1066.

When the cluster 106 is in partial network coverage, it may be advantageous for the SyncRef UE 1064 and the cluster head 1062 to be a cluster tracker 1066 which has network access (since the cluster 106 may then maintain both contact to and synchronization with the remaining part of the network 20).

In an example where only one cluster tracker 1066 of the cluster 106 has network coverage, this cluster tracker 1066 may act as both SyncRef UE 1064 and cluster head 1062. In another example, where more than one cluster tracker 1066 has network coverage, the selection may be random, or based on properties of the cluster trackers in coverage such as remaining battery life or other criteria mentioned above. In particular, for the role of the cluster head 1064 the cluster tracker 1066 with highest remaining battery life (or other capacity such as storage) may be selected.

In an embodiment, the cluster trackers 1066 may append data to their metadata broadcasts to the cluster head 1062 in step S310 to indicate their signal status with respect to the network (e.g., a measured RSSI of a signal received from a gNB) to facilitate the above selection.

In an embodiment, a cluster tracker 1066 that has become a cluster head 1062 or has decided to become a cluster head 1062 broadcasts this information to other cluster trackers 1066 in the cluster 106. Another cluster tracker 1066 that is currently serving as cluster head 1062, may continue to do so or stop serving as cluster head 1062 based on the information received from the new cluster head 1062. The cluster heads 1062 or cluster trackers 1066 that have decided to become a cluster head 1062 may report their cluster head role to the network 20, possibly together with additional information, such as energy status information or signal strength information. The network 20 may decide to pick one of the cluster heads 1062 to be the head of the cluster 106 and may inform that cluster head 1062 of that decision, and/or may inform the other cluster head(s) 1062 to stop being a cluster head 1062.

In an embodiment, both roles of SyncRef UE 1064 and cluster head 1062 may rotate between cluster trackers 1066 of the cluster 106 with each wake cycle, e.g., based on data communicated during the previous wake cycle or based on a pre-set schedule.

Where no external timing source (e.g., GNSS) Is available, the timing of subsequent wake cycles may be provided by an internal clock of the SyncRef UE 1064 during intermediate sleep cycles. In this case, the wake times of each sleep/wake cycle may be defined with enough length to compensate for expected clock drift of the cluster trackers 1066. For example, for a cluster tracker 1066 in which the worst-case clock drift is +/-1s per day, for a 6h sleep cycle a wake cycle of 0.5s plus one transmission time may guarantee that the wake cycles of the two worst performing cluster trackers 1066 overlap by at least one transmission time (although the wake cycle could be longer than this for practicality). This may require a configuration of related parameters (e.g., clock drift) e.g. by the network 20 on the SyncRef UEs 1064. Such a configuration may be based on a policy.

Within each wake cycle, the cluster trackers 1066 of the cluster 106 wake up and transmit their ID while listening for any received IDs in step S310, similar to step S307 in the standalone mode. In addition to the IDs, the cluster trackers 1066 may communicate metadata containing e.g. their remaining battery life (optionally, this metadata may only be communicated on some fraction of the wake cycles). Such metadata can be used to assign the role of the cluster head 1062 to one of the cluster trackers 1066 within the cluster 106.

As indicated above, the role of the cluster head 1062 may rotate after each wake cycle or less frequently as required. The cluster head 1062 may initially be the same cluster tracker as the SyncRef UE 1064 for the first wake cycle. On subsequent wake cycles, the cluster trackers 1066 may advertise via the metadata their availability and/or suitability for the role of the cluster head (e.g., due to high remaining battery life) to the network 20, or alternatively the current cluster head 1062 may make this determination.

If the intended next cluster head is selected by the current cluster head 1062 during the wake cycle, and if and only if a positive response to confirm the role change is received, the role may rotate at the next wake cycle. The selection may be based on information collected and shared by potential cluster head candidates regarding their capability to reach all members in the cluster 106. In this way, it is possible to have high certainty that there is always exactly one cluster head 1062.

In some scenarios, some cluster trackers 1066 may never be selected as cluster head 1062. However, the above procedure at least allows for some rotation or sharing of the role within the cluster 106.

In embodiments, resource blocks for the out-of-coverage D2D cluster transmissions may be chosen from a set of defaults reserved in the standards (similar to the semi-persistent scheduling of mode 3 or 4 out-of-coverage D2D referenced earlier).

The communication of received unique IDs by the trackers in steps S307 and S310 within each wake cycle may be achieved by forwarding a list of received unique IDs, each labelled with a timestamp, and their own metadata, to the network 20 or cluster head 1062, respectively, where the lists of received unique IDs and time stamps are stored along with metadata from each tracker. Optionally, in scenarios where out-of-coverage states are expected frequently for the cluster 106, the stored IDs may be stored by all cluster trackers 1066 of the cluster 106 rather than just the cluster head 1062. This may enhance their likelihood of being received by the network 20 where the cluster trackers 1066 may move independently.

Optionally, all cluster trackers 1066 of a cluster 106 (or at least the SyncRef UE 1064 and the cluster head 1062) may be mandated (e.g., by the network 20 or an installer's UE 40) to wake up by default at a certain period (e.g., once per day or a longer period) and transmit their ID and metadata report using their maximum D2D tracking range. This option may be advantageous to find any 'lost' cluster trackers 1066 which may have moved out of the tracking range of their cluster 106 and to enable out-of-coverage provisioning for new trackers. Such new or lost trackers may thus find the cluster head 1062 with higher probability and be able to (re-)join their cluster 106.

When in-coverage, the cluster head reports in step S311 the accumulated unique IDs, timestamps and metadata to the network 20. The network-side model 202 uses the information from the cluster head 1062 to update its location estimate, as in the standalone mode.

In an embodiment, the network-side model 202 further determines whether it is advantageous to maintain or break the cluster 106 or modify the tracking range or sleep/wake cycles, as in the standalone mode (e.g., step S313).

Additionally, in embodiments, such decisions may be taken locally by the cluster head 1062 based on a policy stored locally or deployed by the network 20 and related new parameters (e.g., altered tracking range, role of SyncRef UE, sleep/wake cycles, etc.) may be communicated to the cluster trackers 1066 and/or the SyncRef UE 1064 in step S308.

For instance, if the cluster trackers 1066 are using a high transmission power to exchange the reports and/or the cluster head 1062 or the SyncRef UE 1064 transmit with excessive power, the cluster head 1062 may be configured to decide that it is advantageous to split the cluster 106 to form a new cluster where both clusters can then have lower transmission power (i.e., shorter tracking range). This decision may be based on the required transmission power of the SyncRef UE's signals to reach all cluster trackers 1066 of the cluster 106. In such a case, the cluster head 1062 may be configured to communicate to one of the cluster trackers 1066 that it is required to act as cluster head and SyncRef UE for the new cluster during the following wake cycle. The selection of this cluster tracker 1066 may be based on at least one of low received signal strength (implying high distance from the existing cluster head 1062), battery life and other resources of the candidate cluster trackers. The new cluster then initiates itself and operates as above.

In a second example, the cluster head may lengthen the sleep cycle based on low or no change of the cluster membership and/or low mobility of the cluster 106 as a whole. For instance, this may be done if the cluster 106 has a maximum size (e.g., because otherwise the messages become too long). This decision may be based on the number of cluster trackers 1066 in the cluster 106.

Where a modification is required (as above), the network 20 may transmit desired power and timing parameters to the cluster head 1062, or for locally-applied changes, the cluster head 1062 may transmit related new parameters to the cluster members during a subsequent wake cycle, and the settings are applied during the subsequent or a later wake cycle.

In an embodiment, when in coverage, the cluster head 1062 may, instead of reporting the accumulated unique IDs in step S311, transmit a difference of the accumulated unique IDs compared with a previous wake period (e.g., IDs that are missing and/or new IDs) to reduce the communication overhead.

In an example, a dictionary mapping the potentially long unique IDs to shorter cluster specific or cluster head specific IDs may be used. For instance, if the cluster head 1062 receives unique IDs "0xAAAA AAAA" and "0xBBBB BBBB" in a first wake cycle, it may report in the second wake cycle "0x00" and "0x01" (where "0x00" and "0x01" are two short binary cluster specific IDs mapped to the hexadecimal IDs "0xAAAA AAAA" and "0xBBBB BBBB", respectively).

The thresholds for such decisions may be subject to a policy hardcoded into the trackers or deployed to the trackers via the network 20.

As an example, such a policy may define that the D2D tracking range is reduced by reducing the D2D transmit power required by the trackers and that this may be done for example if trackers receive more ID transmissions from peer trackers than the number required for adequate location estimates.

As another example, dynamic clusters may be formed where the network 20 identifies that a group of trackers are persistently co-located and the network-side model's data indicates or estimates that this is unlikely to change prior to the next wake cycle (e.g., because of no relative tracker motion), e.g., by instructing all but one of the trackers to pause uplink communication to the network 20, while the remaining one reports its contact tracing history (list of received IDs) as before. This decision may optionally also be taken by the trackers themselves, based on receiving the same unique IDs over several wake cycles (which may indicate a static state, as discussed earlier). An tracking range for the cluster 106 may be calculated by the network 20 (or proposed by the cluster head 1062) and communicated to the cluster trackers 1066. The sleep/wake cycle may be left unchanged, or, where the same group of trackers remains co-located for a long time, the sleep cycle may be extended, since there is a low risk of tracker loss. This allows the trackers to conserve power by collectively reducing uplink transmissions, without explicitly entering into the cluster mode (which may require additional resources due to requiring a SyncRef UE 1064 to broadcast synchronization signals).

As a further example, a dynamic selection of which tracker acts as SyncRef UE 1064b and/or cluster head 1062 may be made for an existing cluster 106. This selection may be done by the cluster trackers 1066 of the cluster 106 independently based on a deployed policy or might be done by the network 20 based on existing reports by the cluster trackers 1066. Alternatively, this selection may be based upon at least one of the mutual location of the cluster trackers 1066 of the cluster 106, the location of the cluster 106 with respect to an associated gNB of the network 20, and the coverage status of the cluster 106. For example, where a cluster tracker 1066 is known to be located in the middle of the cluster 106, it can reach all other cluster trackers 1066 within that cluster 106 with lower transmit power (and thus less energy consumption). Thus, it is relevant to select the most suitable cluster tracker.

In the cluster mode, such a policy-based optimization may also be initiated by the cluster head 1062. In this case, in addition to the metadata normally appended to the reporting transmissions by cluster members, the cluster trackers 1066 may also append data indicating their signal strength to the network (e.g., RSSI). The cluster head 1062 may use this data plus the received strength of the intra-cluster transmissions (as a mutual location indicator) as inputs to the decision similarly to the network 20 as described above.

By way of example, the cluster head 1062 may select a most suitable cluster tracker to act as SyncRef UE 1064 or new cluster head in subsequent wake cycles by having all cluster trackers 1066 transmit the synchronization reference signals, and subsequently each broadcasting the received measured power of received synchronization reference signals. The cluster head 1062 may then select the one cluster tracker 1066 whose synchronization reference signals are received at best by all other cluster trackers (i.e., for the cluster tracker in the cluster that receives the synchronization reference signals from a given cluster tracker with the lowest received power, the received signal strength is the highest).

In an embodiment, the selection of the most suitable tracker to act as cluster head 1062 or SyncRef UE 1064 may also or exclusively be based an energy cost by sending/receiving messages to/from the network 20 (e.g., to/from the nearest gNB of the network 20). This may be relevant when the cluster 106 is in partial coverage. For example, if the SyncRef UE 1064 loses connectivity with the network 20 (e.g., because it moves away from the (assigned) gNB), in some scenarios cluster trackers 1066 on the edge of the cluster 106 may remain in-coverage. It is advantageous for these cluster trackers 1066 to take the role of the SyncRef UE 1064 and/or the cluster head 1062 as previously described. This may be advantageous due to allowing the cluster 106 to remain in network contact through the cluster head 1062. However, where this results in high required transmit power within the cluster 106 as a whole, the cluster head 1062 may try to reduce this intra-cluster transmit power (i.e., cluster range).

In an embodiment, the cluster head 1062 may decide to choose a tracker (e.g., a cluster tracker 1066, a standalone tracker 102 or an isolated tracker 104) to act as cluster head 1062 and/or SyncRef UE 1064 which has both network coverage but also lowest average transmit power to the remaining members of the cluster 106. This decision may be based on the received signal strength of the received synchronization reference signals. Trackers receiving the synchronization reference signals with high power will select a lower transmission power and trackers receiving the synchronization reference signals with a low power will chose a higher transmission power.

As another option, the cluster head 1061 may decide to split the cluster 106 into two or more clusters (which may result e.g. in at least one in-coverage cluster and at least one out-of-coverage cluster).

The above decisions may be based on a policy, deployed by the network, balancing power usage against the risk of tracker or cluster loss.

Examples of actions which would allow the network-side model 202 to increase location certainty (on average) may include at least one of increasing D2D tracking range (this may be done globally, or for a specific tracker which is suspected to be close to a second tracker which is either out-of-coverage or low on resources (in cluster mode, the cluster head 1061 may also initiate this optimization)), reducing the sleep cycle and/or increasing the wake cycle (since more measurements can be done, and there is a lower risk of tracker loss which may occur during sleep periods due to tracker motion (in cluster mode, the cluster head 1061 may also initiate this optimization)), breaking clusters and controlling trackers to revert to the (pure) standalone mode.

The network-side model is therefore configured to optimize the tracking system for low power use while increasing location accuracy only for those trackers where it is required.

In embodiments, the updated settings and configurations used to implement the optimized tracking system may be (securely) communicated by the network 20 to the trackers. To achieve this, the network 20 (i.e., particular elements/functions if it) may have an authorization to do these updates.

In embodiments, in addition to the above optimizations, the network-side model 202 may be configured to instruct a group of trackers (e.g., cluster trackers 1066, standalone trackers 102 or isolated trackers 104) to enter the cluster mode in some scenarios. Trackers might also enter the cluster mode by themselves under at least one of the following circumstances specified in a policy deployed to the trackers by the network.

An advantage of the cluster mode is that it works in an out-of-coverage state, and therefore the network-side model 202 will base the decision primarily on whether loss of signal is likely or expected for a given tracker or group of trackers. This may be for example estimated from their relative motion or position near a cell boundary or from their reported network-RSSI or other values. Trackers may enter the cluster mode by themselves, e.g., when the RSSI value falls under a threshold value. Alternatively, this decision may be made locally by a group of trackers in response to a policy deployed to them via the network 20. This may especially be the case during a provisioning step (as described herein in connection with the cluster provisioning mode) where details indicating a high likelihood of mobility of the trackers are provided e.g. by an installer's UE 40. When in the cluster mode, a tracker may attempt to join any nearby cluster 106 as described herein in connection with out-of-coverage provisioning. Once a tracker has successfully joined a cluster 106, the cluster head 1061 may decide on each wake cycle whether to remain in cluster mode or break the cluster 106, using RSSI data between the network 20 and each cluster tracker 1066 of the cluster 106 which is appended to their metadata.

A secondary reason to enter the cluster mode may be because a tracker's known or expected future location may put it in range of one or more isolated trackers 104 that are out of coverage, so that having SyncRef UE signals at that location may enable the network 20 to discover the one or more out-of-coverage isolated trackers 104. This may be the case where the tracker is at a cell boundary or where it is in motion with a predictable or known trajectory (e.g., attached to a vehicle for which the route plan is known and reported as part of the metadata).

A third reason to enter the cluster mode is that it potentially allows energy savings by minimizing long-range transmissions from the cluster members (as described above). This decision may be made centrally by the network-side model or locally by any cluster head 1061 or tracker, based on the contents of its received IDs and its coverage status to the network 20.

In an embodiment, having determined that one or more trackers should enter the cluster mode, the network-side model 202 may instruct those trackers to enter the cluster mode via the network 20, wherein the network 20 may be configured to initially act as cluster head 1062 and SyncRef UE 1064 (in this case the synchronization reference signals may be the network's usual synchronization signals and not the sidelink/D2D synchronization signals which would be used by the SyncRef UE 1064 when in an out-of-coverage state. The SyncRef UE and cluster head roles may then be subsequently shared between members of the cluster 106 according to at least one of battery life, other available resources, and (possibly) mutual location, as described earlier and later herein.

A trigger for a switch from network-provided synchronization reference signals to locally generated (i.e., by a SyncRef UE 1064) may be initiated immediately (i.e., on the second wake cycle, when the network 20 has provided synchronization reference signals during the first wake cycle), or when any one of the cluster (head) moves out of coverage (this may be advantageous by waiting until a 'risk' of loss of coverage has been detected, which helps preserve power in the trackers by not requiring a SyncRef UE 1064 until the latest possible moment, but may induce an increased risk of loss of synchronization for the entire cluster 106 if they all go out of coverage at the same time, without a locally-defined SyncRef UE 1064).

The decision between the two above options may be taken either by the network 20 or by any one of the cluster trackers 1066 of the cluster 106. For example, either the network-side model 202 or any individual cluster tracker 1066 of the cluster 106 may initiate a switch to locally generated synchronization reference signals on the subsequent wake cycle, e.g., by setting a suitable logical flag. This allows individual trackers to 'detach' from network control in a safe manner (i.e., without a risk of loss of the whole cluster 106 if all trackers suddenly move out of coverage).

In an example, a tracker may determine that local synchronization reference signals would be advantageous based on at least one of a detected low RSSI (indicating location near a cell edge), a detected local movement, and detected configuration details that indicate a risk of sudden movement (e.g., for a pallet on a truck).

Returning to the main-use-phase procedure of Fig. 3, when the tracker determines in step S304 that it is out of the coverage area of a network 20, then it checks in step S306 whether it can initiate the cluster mode (e.g., based on the above mentioned criteria) or needs to stay isolated (ISO).

In the first case, the procedure branches to step S309 where the out-of-coverage tracker 102 becomes a cluster tracker 1066 and receives synchronization reference signals from the SyncRef UE 1064 of the cluster 106.

In the latter case, if the out-of-coverage tracker 102 receives no other tracker IDs in step S306 during a wake cycle, then it determines that it is an isolated tracker (ITR). It then attempts in step S315 (CNT) to contact the network 20 or a SyncRef UE 1064 of a nearby cluster. When network contact has been established, the isolated tracker 104 reverts to the provisioning phase (PP) in step S316 and re-attempts provisioning as described above with reference to Fig. 2.

However, if such an isolated tracker 104 may determine that it is in coverage (again), the procedure branches to step S305 and the isolated tracker 104 may be set to the standalone mode.

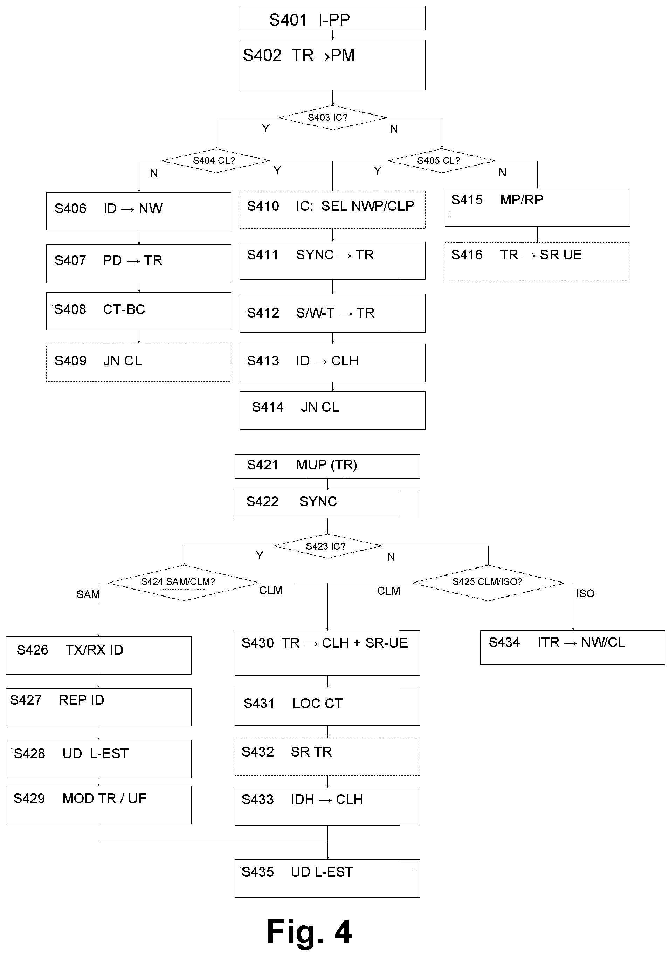

Fig. 4 schematically shows flow diagrams of sub-procedures of a provisioning phase (steps S401 to S416) and a main use phase (steps S421 to S435) according to respective embodiments, which may be executed by a processing unit of a tracker (TR). It is noted that the functions and parameters described in connection with steps S401 to S435 include all related and/or applicable options and examples described above in connection with Figs. 2 and 3.

In step S401, the initial provisioning phase (I-PP) is started when the tracker is switched on for the first time and enters the provisioning mode.

In step S402, the trackers attempt to contact a network via existing protocols and/or attempts to find other nearby trackers which are in a cluster.

In step S403 (IC), the tracker determines whether it is in the coverage area of a network. If so, it determines in step S404 whether it has found a nearby cluster. Similarly, if not, the tracker determines in step S405 whether it has found a nearby cluster.

If the tracker determines in step S404 that no nearby cluster has been found, the procedure branches to step S406 and the tracker communicates its unique ID (and optional metadata) to the network (NW).

Then, in step S407, the tracker waits until it receives provisioning data (PD) which may include nearby clusters (if available) from the network.

In subsequent step S408, the tracker uses the data supplied by the network to begin contact tracing broadcasts (CT-BC).

In an optional step S409, the network may instruct the tracker to join any suitable cluster immediately.

Otherwise, if the tracker determines in step S404 or in step S405 that a nearby cluster has been found, the procedure branches to step S410 (when the tracker is in coverage and in range of a cluster) and the tracker may select network provisioning (NWP) or cluster provisioning (CLP).

Then, the tracker communicates with the SyncRef UE of the cluster to receive synchronization reference signals (SYNC) from the SynRef UE in step S411 and sleep/wake timings (S/W-T) from cluster head in step S412.

In step S413, the tracker communicates its unique ID to the cluster head.

Finally, in step S414, the tracker joins the cluster and is provisioned.

Otherwise, if the tracker determines in step S405 that no nearby cluster has been found, the procedure branches to step S415 and the tracker determines that it requires manual provisioning (MP) by an operating person (e.g., via an installer's UE) or that it cannot be provisioned and re-attempts (RP) the provisioning phase at defined intervals (or after detected events such as motion).

In an optional step S416, the tracker may attempt to form its own cluster by becoming a SyncRef UE (SR-UE) and waiting until other trackers are found.

When, the tracker is provisioned according to one of the above branches, the main use phase (tracking) (MUP (TR)) may be initiated in step S421.

In step S422, the tracker enters a wake state during wake cycles according to the provisioned sleep/wake timing that defines specific sleep and wake cycles and the tracker attempt to synchronize (SYNC) to the network or a determined local cluster.

Then, in step S423, the tracker determines whether it is in coverage (IC) of the network.

If so, the procedure branches to step S424 where the tracker determines whether it enters the cluster mode (CLM) or the standalone mode (SAM), e.g., based on the criteria and options described above in connection with Fig. 3.

If the tracker selects the standalone mode in step S424, the procedure branches to step S426 where the tracker broadcasts (TX) its unique ID (using e.g. over a local-area protocol) and listens (RX) for received IDs and associated metadata.

Then, according to a pre-set schedule or network request, the tracker reports (REP) its received IDs and relevant metadata to the network in step S427, so that a network-side model of the network can update its estimate of locations of all trackers with the newly received information from the tracker. Optionally, this update may be confirmed to the tracker in step S428 (UD L-EST).

Based on the location estimate produced by the network-side model, the tracker may optionally receive from the network a request to modify (MOD) its tracking range (TR) and/or update frequency (UF) in step S429.

Otherwise, if the tracker selects the cluster mode in step S424, the procedure branches to step S430 where the tracker initially may operate as both cluster head (CLH) and SyncRef UE (SR-UE), wherein the roles of the cluster head and the SyncRef UE may be distributed among the cluster members on subsequent wake cycles to optimize energy use.

In step S431, the tracker and other cluster members continue to contact trace locally (LOC CT) by attempting to receive IDs from other trackers.

Optionally, when the local contacts are observed to change, the tracker in its initial role as cluster head (or a newly selected cluster head) may actively search for any nearby trackers (SR TR) in step S432.

When in range of the network, the tracker in its initial role as cluster head (or a newly selected cluster head (CLH) and/or any other tracker(s) as requested by the Network) may report the accumulated ID history (IDH) in step S433.

The above steps S429 and S433 are followed by a common step S435 where tracker location estimates are updated by the network-side model (and receipt may optionally be confirmed to the tracker) and reported to a suitable downstream application as required.

Otherwise, if the tracker determines in step S423 that it is out of coverage, the procedure branches to step S425 where the tracker determines whether it enters the cluster mode (CLM) or is an isolated tracker (ISO), e.g., based on the criteria and options described above in connection with Fig. 3.

If the tracker selects the cluster mode in step S425, the procedure branches to step S430 and continues there.

Otherwise, if the tracker determines in step S425 that it is an isolated tracker, it attempts in step S434 to re-establish contact with the network (NW) or join a cluster (CL), e.g., as described above in connection with Fig. 3.

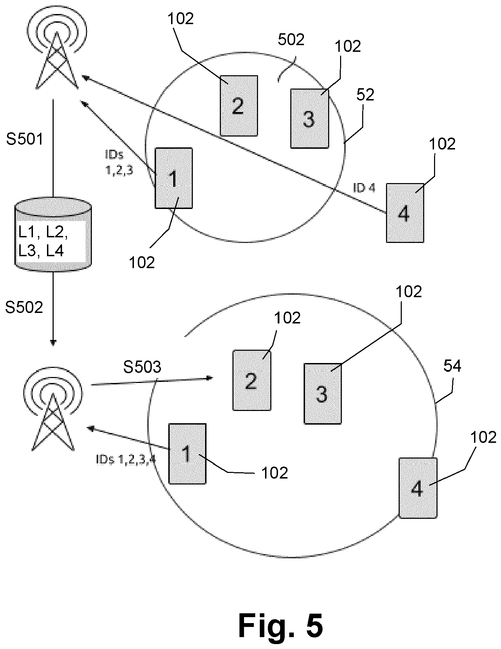

Fig. 5 schematically shows an example of an asset tracking system with standalone mode and dynamic clusters according to an embodiment.

As shown in the upper portion of Fig. 5, number 1, 2 and 3 of asset trackers 102 are co-located within a D2D tracking range (e.g., PCS) 502 with a range 52 of contact tracing. Number 4 of the asset trackers 102 is out of the D2D tracking 502 range but still in network coverage (e.g., Uu interface to gNB).

In step S501, the network (e.g., network-side model) cluster head calculates respective location estimates L1, L2, L3, L4 of the locations of numbers 1 to 4 of the asset trackers 102 based on their broadcast IDs 1 to 4 and metadata received at the gNB. However, as asset tracer number 4 is out of the D2D tracking range 52, it operates in the standalone mode and needs to report its ID via a separate transmission, while asset tracker number 1 which acts as cluster head can report the accumulated IDs of asset trackers number 1 to 3.

Then, in step S502, based on the received metadata (e.g., as described above in connection with Fig. 3), the network or the cluster head calculates a new dynamic cluster with increased ranging power for contact tracing and signals the increased ranging power in step S503 to the cluster, so that an increased range 54 of D2D contact tracing is temporarily provided and number 4 of the asset tracers 102 is now located within the enhanced contact tracing range 54. As a result, number 1 of the asset tracers 102 which acts as the cluster head receives IDs from all other asset tracers (i.e., number 2 to 4) and can report all IDs without a need for the asset tracer number 4 to report separately.

To summarize, an asset tracking system and method have been described, which allow low-capability, low-cost asset trackers to be tracked by a telecommunications or other wireless network while substantially reducing the power demand on the asset trackers, by providing mutual contact tracing by the trackers over a low-power local protocol. The contacts may be reported to a network which is able to optimize for power usage by the trackers versus location certainty of its ongoing model by reducing the number of, and/or transmit power of, uplink or D2D transmissions, and/or by fixed or dynamic cluster formation as required.

While the invention has been illustrated and described in detail in the drawings and foregoing description, such illustration and description are to be considered illustrative or exemplary and not restrictive. The invention is not limited to the disclosed embodiments. The proposed enhanced asset tracking system and procedures can be implemented in all types of wireless networks, e.g., it can be applied to trackers communicating using cellular wireless communication standards, specifically the 3rd Generation Partnership Project (3GPP) 5G and New Radio (NR) specifications. The 5G wireless communication trackers can be different types of devices, e.g., mobile phones, smart watches, smart tags for location tracking and logistics, vehicles (for vehicle-to-vehicle (V2V) communication or more general vehicle-to-everything (V2X) communication), V2X devices, IoT hubs, IoT devices, including low-power medical sensors for health monitoring, medical (emergency) diagnosis and treatment devices, for hospital use or first-responder use, virtual reality (VR) headsets, etc.

Although ProSe relay and sidelink communication have been described, the invention also applies to other types of relay devices, such as (smart) repeater devices, Integrated Access and Backhaul (IAB) nodes, or Wi-Fi Mesh APs.

Furthermore, the invention can be applied in medical applications or connected healthcare in which multiple wireless (e.g. 4G/5G) connected sensor or actuator nodes participate, in medical applications or connected healthcare in which a wireless (e.g. 4G/5G) connected equipment consumes or generates occasionally a continuous data stream of a certain average data rate, for example video, ultrasound, X-Ray, Computed Tomography (CT) imaging devices, real-time patient sensors, audio or voice or video streaming devices used by medical staff, in general IoT applications involving wireless, mobile or stationary, sensor or actuator nodes (e.g. smart city, logistics, farming, etc.), in emergency services and critical communication applications, in V2X systems, in systems for improved coverage for 5G cellular networks using high-frequency (e.g. mmWave) RF, and any other application areas of 5G communication where relaying is used.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

Furthermore, in those instances where a convention analogous to "at least one of A, B, and C, etc. " is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc. " is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B.

A single unit or device may fulfill the functions of several items recited in the claims. The mere fact that certain measures are recited in mutually different dependent claims does not indicate that a combination of these measures cannot be used to advantage.

The described operations like those indicated in Figs. 2 to 4 can be implemented as program code means of a computer program and/or as dedicated hardware of the commissioning device or luminaire device, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

**Claims**

1. An apparatus for controlling a tracker (102, 104, 1066) to provide information about the tracker (102, 104, 1066) and/or a tracked item via a wireless network (20) to a tracker control system, wherein the apparatus is adapted to:

   perform local contact tracing of other trackers (102, 104, 1066); and
   provide contact reports derived from the local contact tracing to the tracker control system.

2. The apparatus of claim 1, wherein the contact report includes the contacted tracker identities and/or contacted tracker types and/or contacted tracker sensed values and/or contacted tracker location.

3. The apparatus of claim 1 or 2, wherein the local contact tracing is configured to save energy of trackers (102, 104, 1066) of the tracker control system by at least one of combining individual contact reports to reduce the number and range of uplink communications required for any of the trackers (102, 104, 1066), allowing for network- or cluster-controlled sleep and/or wake cycles of the tracker (102, 104, 1066), and delegating a task of maintaining network contact to a tracker (102, 104, 1066).

4. The apparatus of claim 3, wherein the apparatus is adapted to retain functionality even when out of coverage of the wireless network (20) by enabling the tracker (102, 104, 1066) to be locally provisioned and maintained, in such a way to be discoverable at suitable times and report information about contacts which occurred with the tracker (102, 104, 1066) while out-of-coverage.

5. The apparatus of any of the previous claims, wherein the apparatus is adapted to control a contact tracing range (52, 54) and/or sleep and/or wake cycles of the tracker (102, 104, 1066) based on at least one of a location and a detected movement of the tracker (102, 104, 1066).

6. The apparatus of any of the previous claims, wherein the apparatus is adapted to enter a provisioning mode, in which it attempts to discover the wireless network (20) and/or local trackers (1066) which are part of a cluster (106).

7. An apparatus for controlling a tracker control system operated via a wireless network (20), wherein the apparatus is adapted to:

obtain information about a plurality of trackers (102, 104, 1066) and/or tracked items of the tracker control system, the information being reported by at least one of the plurality of trackers (102, 104, 1066) via contact tracing; and
control at least one of the plurality of trackers (102, 104, 1066) to change at least one of a contact tracing range (52, 54) and sleep and/or wake cycles and/or to reduce a number of uplink transmissions and/or to form a cluster (106) of trackers (1066).

8. The apparatus of claim 7, wherein the apparatus comprises a network-side model (202) configured to change at least one of the contact tracing range (52, 54) and the sleep and/or wake cycles of the plurality of trackers (102, 104, 1066).

9. The apparatus of claim 8, wherein the network-side model (202) is adapted to use received identification information reported by the plurality of trackers (102, 104, 1066) and known location-related information of some of the plurality of trackers (102, 104, 1066) and/or non-tracker devices to calculate a known or inferred location-related information of each of the plurality of trackers (102, 104, 1066).

10. The apparatus of claim 7, 8 or 9, wherein the apparatus is adapted to enable provisioning of at least one cluster (106) of trackers (1066) in such a way that the cluster (106) is discoverable by trackers (104) or the tracker control system and configured to report information about traced contacts which occurred with trackers (1066) of the cluster (106) while out of coverage of the wireless network (20).

11. A tracker (102, 104, 1066) comprising an apparatus according to any one of claims 1 to 6.

12. The tracker of claim 11, wherein the tracker (102, 104, 1066) is adapted to provide location information to a tracker control system and wherein the contact report includes information about a contact with another tracker (102, 104, 1066).

13. A tracker control system comprising a plurality of trackers (102, 104, 1066) according to claim 11 or 12 and a wireless network (20) comprising an apparatus according to any one of claims 7 to 10 in a network device and/or in a cluster head (1062) of a cluster (106) of cluster trackers (1066), wherein the system further comprises a synchronization device (1064) for providing a time synchronization reference signal to the cluster trackers (1066) within a cluster range.

14. A method of controlling a tracker (102, 104, 1066) to provide information about the tracker (102, 104, 1066) and/or a tracked item via a wireless network (20) to a tracker control system, wherein the method comprises:

performing local contact tracing of other trackers (102, 104, 1066); and
providing contact reports derived from the local contact tracing to the tracker control system.

15. A method of controlling a tracker control system operated via a wireless network (20), wherein the method comprises:

obtaining information about a plurality of trackers (102, 104, 1066) and/or tracked items of the tracker control system, the information being reported by at least one of the plurality of trackers (102, 104, 1066) via contact tracing; and
controlling at least one of the plurality of trackers (102, 104, 1066) to change at least one of a contact tracing range (52, 54) and sleep and/or wake cycles and/or to reduce a number of uplink transmissions and/or to form a cluster (106) of trackers (1066).

10  AT

102  TR

104  ITR

106  CL

1062  CLH

1064  SR-UE

1066  CL-TR

20  NW

202  NSM

204 TP-DB

30  LD-CL

40  I-UE

# Fig. 1

S201 I-PP

S202 PM

CL-PM

S203 IC?

Y                    N

S204 CL?

Y                    N

102   TR

S205 ID

20   NW

106   CL

1064   SR-UE

S211 MP

S208 SYNC

S206 S/W

104   ITR

40      I-UE

S209 ID

S212 SYNC

S207 TR→CL

1062   CLH

104   ITR

S210 S/W

S213 TR→M

# Fig. 2

S301    MUP

S302 TR-WA

102    TR

S303 SYNC?

S304 IC?

Y              N

S305 SAM/CLM?              S306 CLM/ISO?

SAM              CLM              CLM              ISO

106    CL

1064 SR-UE

S309
SYNC

S308
TRR/SW    1066 CL-TR

S310 ID

102    TR

S307 ID

1062 CLH

S311 IDs

104    ITR

S315 CNT

20 NW, 1064 SR-UE

S316 PP

PP

20  NW

S312 IDs

S313 TRR, S/W, CL

202  NSM

S314 LU

204
TP-DB

# Fig. 3

**Fig. 4**

102
502
102

S501

IDs
1,2,3

2
3
52

102

1

ID 4

102

4

L1, L2,
L3, L4

102

S502

102
102

S503

2
3

54

1
102

IDs 1,2,3,4

102

4

# Fig. 5

Europäisches
Patentamt

European
Patent Office

Office européen
des brevets

# EUROPEAN SEARCH REPORT

Application Number

**EP 22 18 3737**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/167724 A1 (KLITENIK KONSTANTIN [US] ET AL) 28 May 2020 (2020-05-28) <br> * abstract * <br> * paragraph [0012] – paragraph [0018] * <br> * paragraph [0028] – paragraph [0089] * <br> * figures 1-7 * <br> ----- | 1-15 | INV. <br> H04W4/029 <br> H04W4/50 |
| X | US 2021/256833 A1 (DAOURA DANIEL J [US] ET AL) 19 August 2021 (2021-08-19) <br> * abstract * <br> * paragraph [0012] – paragraph [0034] * <br> * paragraph [0138] – paragraph [0496] * <br> * figures 1-41 * <br> ----- | 1-15 | |
| X | WO 2022/081315 A2 (QUALCOMM INC [US]) 21 April 2022 (2022-04-21) <br> * abstract * <br> * paragraph [0001] – paragraph [0014] * <br> * paragraph [0037] – paragraph [0232] * <br> * figures 1-19 * <br> ----- | 1-15 | |

TECHNICAL FIELDS
SEARCHED      (IPC)

H04W

The present search report has been drawn up for all claims

| Place of search | Date of completion of the search | Examiner |
|---|---|---|
| Munich | 14 December 2022 | Körbler, Günther |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 18 3737

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2022

| Patent document cited in search report | | Publication date | Patent family member(s) | | Publication date |
|---|---|---|---|---|---|
| US 2020167724 | A1 | 28-05-2020 | US 2020167724 A1 | | 28-05-2020 |
| | | | WO 2020110036 A1 | | 04-06-2020 |
| US 2021256833 | A1 | 19-08-2021 | NONE | | |
| WO 2022081315 | A2 | 21-04-2022 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RUOXI SUN et al.** An Empirical Assessment of Global COVID-19 Contact Tracing Applications. *arXiv:2006.10933v6,* 22 January 2021
- **SAMUEL BRACK et al.** CAUDHT: Decentralized Contact Tracing Using a DHT and Blind Signatures. *IEEE 2020*
- **MARIO H. CASTAÑEDA GARCIA et al.** A Tutorial on 5G NR V2X Communications. *IEEE Communications Surveys & Tutorials journal*
- **ZORAZE ALI et al.** 3GPP NR V2X Mode 2: Overview, Models and System-Level Evaluation. *IEEE Access,* 29 June 2021
- **MARIO H. CASTAÑEDA GARCIA et al.** *A Tutorial on 5G NR V2X Communications*
- **M. S. BARTLETT.** Smoothing Periodograms from Time-Series with Continuous Spectra. *Multiple Signal Classification (MUSIC), https://en.wikipedia.org/wiki/MUSIC (algorithm))*

- **J.CAPON.** High-resolution frequency-wavenumber spectrum analysis. *Proceedings of IEEE,* vol. 57 (8
- **LI MANMAN et al.** Energy-Efficient Dynamic Clustering for IoT Applications: A Neural Network Approach. *IEEE Eighth International Conference on Communications and Networking (ComNet),* 27 October 2020
- **NATHALIE BARBOSA ROA et al.** A novel algorithm for dynamic clustering: properties and performance. *15th IEEE International Conference on Machine Learning and Applications (ICMLA),* December 2016, 565-570
- **DAMIAN ROCA et al.** Emergent Behaviors in Internet of Things: The Ultimate Ultra-Large-Scale System. *IEEE MICRO, SPECIAL ISSUE IOT*